(19) Europäisches Patentamt
European Patent Office
Office européen des brevets

(11) **EP 3 296 097 B1**

(12) **EUROPEAN PATENT SPECIFICATION**

(45) Date of publication and mention of the grant of the patent:
**01.05.2019 Bulletin 2019/18**

(51) Int Cl.:
**B32B 1/02** *(2006.01)*          **B32B 27/36** *(2006.01)*
**B32B 27/34** *(2006.01)*          **B32B 27/18** *(2006.01)*
**B65D 1/02** *(2006.01)*           **B65D 81/26** *(2006.01)*

(21) Application number: **17189939.6**

(22) Date of filing: **07.09.2017**

(54) **MULTILAYER CONTAINER AND METHOD FOR PRODUCING REGENERATED POLYESTER**

MEHRSCHICHTIGER BEHÄLTER UND VERFAHREN ZUR HERSTELLUNG VON REGENERIERTEM POLYESTER

RÉCIPIENT MULTICOUCHE ET PROCÉDÉ DE PRODUCTION DE POLYESTER RÉGÉNÉRÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.09.2016 JP 2016180587**

(43) Date of publication of application:
**21.03.2018 Bulletin 2018/12**

(73) Proprietor: **Mitsubishi Gas Chemical Company, Inc.**
**Tokyo 100-8324 (JP)**

(72) Inventors:
• **OTSUKA, Kosuke**
  **Hiratsuka-shi, Kanagawa 2540016 (JP)**
• **ODA, Takafumi**
  **Hiratsuka-shi, Kanagawa 2540016 (JP)**

(74) Representative: **Vossius & Partner**
**Patentanwälte Rechtsanwälte mbB**
**Siebertstrasse 3**
**81675 München (DE)**

(56) References cited:
WO-A1-2016/027577     JP-A- 2005 112 468
JP-A- 2013 039 964     US-A1- 2004 224 112
US-A1- 2010 233 405

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present invention relates to a multilayer container and a method for producing a regenerated polyester.

Background Art

Polymers obtained by using, as monomers, an aromatic dicarboxylic acid compound and an aliphatic diol compound, for example, polyester resins represented by polyethylene terephthalate (PET) and so on, have such advantages that they are excellent in transparency, mechanical performance, melt stability, solvent resistance, flavor retention, gas barrier property, recyclability, and so on. For that reason, the polyester resins are widely used as various packaging materials, such as films, sheets, and hollow containers. Though the polyester resins have a high gas barrier property, they are not always sufficient for applications where a more gas barrier property against oxygen, carbon dioxide is required. For that reason, examples of a method for improving the gas barrier property of polyester resin include methods, such as vapor deposition of aluminum oxide or silicon oxide onto a molded article or a packaging container made of a polyester resin, or coating, lamination, or melt mixing of a molded article or a packaging container made of a polyester resin with a resin having a gas barrier property higher than that of a polyester resin.

An example of resins having such a higher gas barrier property than polyester resins is an ethylene-vinyl alcohol copolymer resin. The ethylene-vinyl alcohol copolymer resin has poor compatibility with polyester resin, due to a characteristic intrinsic to the molecular structure thereof. When the both resins are mixed together, the formed resin composition assumes a white turbid state, so that there was involved such a defect that the transparency which is a merit of polyester resin is impaired. Further, at an optimum processing temperature for polyester resin, the ethylene-vinyl alcohol copolymer resin tends to rapidly undergo thermal degradation, and therefore causes a problem of detracting from the processing stability of polyester resin.

Examples of other gas barrier resins than ethylene-vinyl alcohol copolymer resins include polyamide resins represented by nylon 6, nylon 66, and so on. In particular, polymetaxylyleneadipamide, which is obtained through polymerization of a diamine component composed mainly of metaxylylenediamine and a dicarboxylic acid component composed mainly of adipic acid, is a polyamide resin especially excellent in gas barrier property, and hence, it is suitable. As compared with any other polyamide resins, polymetaxylyleneadipamide has a higher gas barrier property and, in addition, has a glass transition temperature, a melting point, and crystallinity that are close to those of polyethylene terephthalate, which is one of the most generally used polyester resins, has a similar molding condition to that of polyethylene terephthalate, and hence, it is readily subjected to molding processing with polyester resin. Consequently, it may be said that polymetaxylyleneadipamide is a resin extremely suitable as a material for improving the gas barrier property of polyester resin.

In addition, in order to give a more gas barrier property to the aforementioned polyamide resin, the addition of a cobalt salt is carried out.

However, in the polyester resin composition containing a polyamide resin, there is a possibility that yellowing to be caused due to thermal history is liable to proceed as compared with a polyester resin alone. For that reason, there is a concern that yellowing is caused in a polyamide resin-containing polyester container per se, or in a recycle process of recovering the container and reusing it. This becomes a factor of lowering a commercial value of the packaging container, and hence, there has been required a method of suppressing the yellowing as far as possible. In response to such a problem, PTL 1 proposes a yellowing-preventing formulation in which a lactone-based stabilizer, a phenol-based stabilizer, an aldehyde scavenger, an organic phosphorus-based stabilizer, are blended in a mixture of a polyester resin and a polyamide resin.

Citation List

Patent Literature

PTL 1: JP 2012-520364 A

Summary of Invention

An object of the present invention is to provide a multilayer container in which yellowing of a regenerated polyester at the time of recycle is suppressed. Furthermore, another object of the present invention is to provide a method for producing a regenerated polyester from the aforementioned multilayer container.

In view of the aforementioned problem, the present inventors made extensive and intensive investigations. As a result, it has been found that when an antioxidant is contained in a polyester resin composition layer, a multilayer container in which yellowing of a regenerated polyester is suppressed, and a method for producing a regenerated polyester from the foregoing multilayer container can be provided, leading to accomplishment of the present invention. The present invention provides the following [1] to [13].

[1] A multilayer container including a polyester resin composition layer containing a polyester resin (X) and an antioxidant; and a polyamide resin composition layer containing a polyamide resin (Y) and a cobalt salt, wherein the polyamide resin (Y) has a structural unit derived from a diamine and a structural unit derived from a dicarboxylic acid; 50 mol% or more (preferably 70 mol% or more, more preferably 80 to 100 mol%, and still more preferably 90 to 100 mol%) of the structural unit derived from a diamine is a structural unit derived from xylylenediamine; the content of the antioxidant in the polyester resin composition layer is from 0.01 to 1% by mass (preferably from 0.02 to 0.8% by mass, more preferably from 0.025 to 0.6% by mass, and still more preferably from 0.05 to 0.2% by mass); and the content of the cobalt salt in the polyamide resin composition layer is from 100 to 1,000 ppm (preferably from 120 to 800 ppm, more preferably from 150 to 600 ppm, and still more preferably from 200 to 500 ppm) as expressed in terms of cobalt.

[2] The multilayer container as set forth in [1], wherein the polyester resin (X) has a structural unit derived from a dicarboxylic acid and a structural unit derived from a diol, 50 mol% or more of the structural unit derived from a dicarboxylic acid being a structural unit derived from terephthalic acid; and 50 mol% or more of the structural unit derived from a diol being a structural unit derived from ethylene glycol.

[3] The multilayer container as set forth in [1] or [2], wherein the polyester resin (X) has a structural unit derived from a dicarboxylic acid and a structural unit derived from a diol, 90 mol% or more of the structural unit derived from a dicarboxylic acid being a structural unit derived from terephthalic acid; and 90 mol% or more of the structural unit derived from a diol being a structural unit derived from ethylene glycol.

[4] The multilayer container as set forth in any one of [1] to [3], wherein the polyamide resin (Y) has a structural unit derived from a diamine and a structural unit derived from a dicarboxylic acid, 80 mol% or more of the structural unit derived from a diamine being a structural unit derived from xylylenediamine (preferably metaxylylenediamine); and 80 mol% or more of the structural unit derived from a dicarboxylic acid being a structural unit derived from adipic acid.

[5] The multilayer container as set forth in any one of [1] to [4], wherein the antioxidant contains at least one selected from the group consisting of a phenol-based antioxidant and a phosphorus-based antioxidant.

[6] The multilayer container as set forth in any one of [1] to [5], wherein the antioxidant contains at least a phenol-based antioxidant.

[7] The multilayer container as set forth in any one of [1] to [6], wherein the content of the polyamide resin (Y) is from 1.0 to 15% by mass (preferably from 1.5 to 12% by mass, and more preferably from 2.0 to 8% by mass) relative to a sum total of the polyester resin composition layer and the polyamide resin composition layer.

[8] The multilayer container as set forth in any one of [1] to [7], having the polyamide resin composition layer sandwiched directly or indirectly between two layers of the polyester resin composition layer (when the polyester resin composition layer is defined as PES, and the polyamide resin composition layer is defined as PA, preferably having a structure of three layers of PES/PA/PES or five layers of PES/PA/PES/PA/PES, and more preferably having a structure of three layers of PES/PA/PES).

[9] Use as a recycle raw material of the multilayer container as set forth in any one of [1] to [8].

[10] A method for producing a regenerated polyester, including a step of recovering the polyester resin composition from the multilayer container as set forth in any one of [1] to [8].

[11] The method for producing a regenerated polyester as set forth in [10], including a step of removing the whole or a part of the polyamide resin composition layer from the multilayer container to recover the polyester resin composition layer.

[12] The method for producing a regenerated polyester according to [11], wherein the removal of the polyamide resin composition layer is conducted by air classification after milling of the multilayer container.

[13] The method for producing a regenerated polyester as set forth in any one of [10] to [12], wherein the recovered polyester resin composition is subjected to at least one step selected from the group consisting of a crystallization step and a solid-phase polymerization step.

In accordance with the present invention, a multilayer container in which yellowing of a regenerated polyester at the time of recycle is suppressed is provided. Furthermore, in accordance with the present invention, a method for producing a regenerated polyester from the aforementioned multilayer container is provided.

Description of Embodiments

The present invention is hereunder described with reference to embodiments thereof. In the following description, the numerical range expressed by the wording "A to B" indicates a numeral range including the end points A and B. Specifically, in the case of A < B, "A or more and B or less" is meant, and in the case of A > B, "A or less and B or more" is meant.

[Multilayer Container]

The multilayer container of the present invention includes a polyester resin composition layer containing a polyester resin (X) and an antioxidant; and a polyamide resin composition layer containing a polyamide resin (Y) and a cobalt salt, wherein the polyamide resin (Y) has a structural unit derived from a diamine and a structural unit derived from a dicarboxylic acid; 50 mol% or more of the structural unit derived from a diamine is a structural unit derived from xylylenediamine; the content of the antioxidant in the polyester resin composition layer is 0.01 to 1% by mass; and the content of the cobalt salt in the polyamide resin composition layer is 100 to 1,000 ppm as expressed in terms of cobalt.

The polyamide resin composition layer in which the cobalt salt is added to the polyamide resin (Y) containing, as the structural unit derived from a diamine, 50 mol% or more of the structural unit derived from xylylenediamine has an oxygen absorption performance, and the multilayer container having such a polyamide resin composition layer has a high oxygen gas barrier property. However, it has been found that there is involved such a problem that in the case of recycling the multilayer container having the polyamide resin composition layer in which the cobalt salt is added, the yellowing more proceeds as compared with a multilayer container having a polyamide resin composition layer not containing a cobalt salt.

As a result of extensive and intensive investigations made by the present inventors, it has been found that when an antioxidant is added to the polyester resin composition layer, the progress of yellowing is suppressed, leading to accomplishment of the present invention.

Though details of the mechanism of revealing such an effect are not elucidated yet, a part thereof may be conjectured as follows.

In the multilayer container of the present invention, at the time of use as a multilayer container, since the cobalt salt is contained in the polyamide resin composition layer, the multilayer container has a high oxygen absorption property, and as a result, it exhibits a high gas barrier property. On the other hand, the cobalt salt works as an oxidation catalyst, thereby causing such a problem that the resin components are oxidized and yellowed. However, it may be estimated that in view of the fact that at the time of recycle, the polyester resin composition layer and the polyamide resin composition layer are melt mixed, the antioxidant which the polyester resin composition layer contains is mixed, whereby the catalytic ability which the cobalt salt has is deactivated, and the progress of yellowing can be suppressed.

The multilayer container of the present invention includes at least one layer of each of the polyester resin composition layer containing the polyester resin (X) and the antioxidant and the polyamide resin composition layer containing the polyamide resin (Y) and the cobalt salt.

<Polyester Resin Composition Layer>

The polyester resin composition layer contains the polyester resin (X) and the antioxidant.

(Polyester Resin (X))

The polyester resin (X) which the polyester resin composition layer contains is preferably a polycondensation polymer between a dicarboxylic acid and a diol. As the structural unit derived from a dicarboxylic acid (dicarboxylic acid unit), a structural unit derived from an aromatic dicarboxylic acid is preferably exemplified, and as the structural unit derived from a diol (diol unit), a structural unit derived from an aliphatic diol is preferably exemplified. The aliphatic diol may be a chain aliphatic diol, or may be a cyclic alicyclic diol.

Examples of the aromatic dicarboxylic acid include terephthalic acid, isophthalic acid, orthophthalic acid, biphenyldicarboxylic acid, diphenyl ether dicarboxylic acid, diphenylsulfone dicarboxylic acid, diphenylketone dicarboxylic acid, 2,6-naphthalenedicarboxylic acid, 1,4-naphthalenedicarboxylic acid, and 2,7-naphthalenedicarboxylic acid. Terephthalic acid, isophthalic acid, orthophthalic acid, naphthalenedicarboxylic acid, and 4,4'-biphenyldicarboxylic acid are preferred, with terephthalic acid being more preferred.

Examples of the aromatic dicarboxylic acid also include sulfophthalic acid and a sulfophthalic acid metal salt. The sulfophthalic acid metal salt is a metal salt of sulfophthalic acid. Examples of the metal atom include an alkali metal, such as lithium, sodium, and potassium, and an alkaline earth metal, such as beryllium, magnesium, calcium, and strontium. Among these, an alkali metal is preferred, sodium or lithium is more preferred, and sodium is still more preferred.

In the sulfophthalic acid and sulfophthalic acid metal salt, the two carboxy groups may bond in any position of an *ortho*-position, a *meta*-position, or a para-position, but they bond preferably in a *meta*- or para-position, and more preferably in a *meta*-position. That is, sulfoterephthalic acid, sulfoisophthalic acid, a sulfoterephthalic acid metal salt, or a sulfoisophthalic acid metal salt is preferred, and sulfoisophthalic acid or a sulfoisophthalic acid metal salt is more preferred.

The sulfophthalic acid and sulfophthalic acid metal salt may be substituted, and examples of the substituent include a substituted or unsubstituted alkyl group and a substituted or unsubstituted aryl group. The carbon number of the alkyl group is preferably 1 to 8, more preferably 1 to 6, and still more preferably 1 to 4. Specifically, examples thereof include a methyl group, an ethyl group, an *n*-propyl group, an isopropyl group, an *n*-butyl group, a *t*-butyl group, an *n*-octyl group, and a 2-ethylhexyl group. The aryl group is preferably an aryl group having a carbon number of 6 to 12. Examples thereof include a phenyl group and a naphthyl group, with a phenyl group being preferred.

Specifically, examples of the sulfophthalic acid and the sulfophthalic acid metal salt include 5-sulfoisophthalic acid, sodium 5-sulfoisophthalate, lithium 5-sulfoisophthalate, potassium 5-sulfoisophthalate, calcium bis(5-sulfoisophthalate), sodium dimethyl 5-sulfoisophthalate, and sodium diethyl 5-sulfoisophthalate.

In the case where the polyester resin contains a structural unit derived from at least one selected from the group consisting of sulfophthalic acid and a sulfophthalic acid metal salt, it is preferred that the resin contains a structural unit derived from at least a sulfophthalic acid metal salt. The total content of the structural unit derived from sulfophthalic acid and a sulfophthalic acid metal salt in the polyester resin is preferably 0.01 to 15 mol%, more preferably 0.03 to 10.0 mol%, still more preferably 0.06 to 5.0 mol%, and yet still more preferably 0.08 to 1.0 mol% of the entire structural unit derived from a dicarboxylic acid.

Examples of the aliphatic diol include chain aliphatic diols having a linear or branched structure, such as ethylene glycol, 2-butene-1,4-diol, trimethylene glycol, tetramethylene glycol, hexamethylene glycol, neopentyl glycol, methylpentanediol, and diethylene glycol; and alicyclic diols, such as cyclohexanedimethanol, isosorbide, spiro glycol, 2,2,4,4-tetramethyl-1,3-cyclobutanediol, norbornene dimethanol, and tricyclodecane dimethanol. Among these, ethylene glycol, neopentyl glycol, and cyclohexanedimethanol are preferred, with ethylene glycol being more preferred.

It is also preferred that the polyester resin contains, as the structural unit derived from a diol, a structural unit derived from an alicyclic diol. The alicyclic diol is preferably at least one alicyclic diol selected from the group consisting of cyclohexanedimethanol, isosorbide, spiro glycol, and 2,2,4,4-tetramethyl-1,3-cyclobutanediol. In the case where the polyester resin contains the aforementioned structural unit derived from an alicyclic diol, its content is preferably 1 to 50 mol%, more preferably 2 to 40 mol%, still more preferably 3 to 30 mol%, and yet still more preferably 5 to 25 mol% of the entire structural unit derived from a diol.

As the polyester resin which is used in the present invention, it is preferred that not only 50 mol% or more of the structural unit derived from a dicarboxylic acid (dicarboxylic acid unit) is a structural unit derived from an aromatic dicarboxylic acid, but also 50 mol% or more of the structural unit derived from a diol (diol unit) is a structural unit derived from an aliphatic diol; it is more preferred that not only 50 mol% or more of the dicarboxylic acid unit is a structural unit derived from terephthalic acid, but also 50 mol% or more of the diol unit is a structural unit derived from ethylene glycol; it is still more preferred that not only 80 mol% or more of the dicarboxylic acid unit is a structural unit derived from terephthalic acid, but also 80 mol% or more of the diol unit is a structural unit derived from ethylene glycol; and it is yet still more preferred that not only 90 mol% or more of the dicarboxylic acid unit is a structural unit derived from terephthalic acid, but also 90 mol% or more of the diol unit is a structural unit derived from ethylene glycol.

In the following description, the polyester resin in which not only 50 mol% or more of the dicarboxylic acid unit is a structural unit derived from terephthalic acid, but also 50 mol% or more of the diol unit is a structural unit derived from ethylene glycol is also referred to as polyethylene terephthalate.

When the proportion of the structural unit derived from terephthalic acid occupying in the dicarboxylic acid unit is 50 mol% or more, as described above, the polyester resin is hard to become amorphous, and accordingly, in the multilayer container, it hardly undergoes thermal shrinkage at the time of filling a high-temperature material therein, and the container has favorable heat resistance.

In the case where the polyethylene terephthalate is used as the polyester resin, the polyester resin may be constituted of polyethylene terephthalate alone but may contain any other polyester resin than polyethylene phthalate, in addition to the polyethylene terephthalate. The content of the polyethylene terephthalate is preferably 80 to 100% by mass, and more preferably 90 to 100% by mass relative to the total amount of the polyester resin.

A preferred embodiment in the case where the polyester resin is polyethylene terephthalate is hereunder described.

The polyethylene terephthalate may be one containing a structural unit derived from any other bifunctional compound than terephthalic acid and ethylene glycol, and examples of the bifunctional compound include the aforementioned aromatic dicarboxylic acids and aliphatic diols other than terephthalic acid and ethylene glycol, as well as other bifunctional compounds than aromatic dicarboxylic acids and aliphatic diols. On this occasion, the structural unit derived from the other bifunctional compound than terephthalic acid and ethylene glycol accounts for preferably 20 mol% or less, and more preferably 10 mol% or less relative to the total mol of the entire structural unit constituting the polyester resin.

Even in the case where the polyester resin is any other polyester resin than polyethylene terephthalate, the polyester resin may be one containing a structural unit derived from any other bifunctional compound than aromatic dicarboxylic acids and aliphatic diols.

Examples of the other bifunctional compound than aliphatic diols and aromatic dicarboxylic acids include other aliphatic bifunctional compounds than aliphatic diols and other aromatic bifunctional compounds than aromatic dicarboxylic acids.

Examples of the other aliphatic bifunctional compounds than aliphatic diols include linear or branched aliphatic bifunctional compounds. Specifically, examples thereof include aliphatic dicarboxylic acids, such as malonic acid, succinic acid, adipic acid, azelaic acid, and sebacic acid; and aliphatic hydroxycarboxylic acids, such as 10-hydroxyoctadecanoyl acid, lactic acid, hydroxyacrylic acid, 2-hydroxy-2-mehtylpropionic acid, and hydoxybutyric acid.

The aforementioned aliphatic bifunctional compound may also be an alicyclic bifunctional compound. Examples thereof include alicyclic dicarboxylic acids, such as cyclohexanedicarboxylic acid, norbornenedicarboxylic acid, and tricyclodecanedicarboxylic acid; and alicyclic hydroxycarboxylic acids, such as hydroxymethyl cyclohexanecarboxylic acid, hydroxymethyl norbornenecarboxylic acid, and hydroxymethyl tricyclodecanecarboxylic acid.

Among these, preferred examples of the alicyclic bifunctional compound include 1,2-cyclohexanedicarboxylic acid, 1,3-cyclohexanedicarboxylic acid, and 1,4-cyclohexanedicarboxylic acid. The copolymerized polyester resin containing a structural unit derived from such an alicyclic bifunctional compound is easily produced, and it is possible to improve drop impact strength or transparency of the multilayer container. Among those described above, 1,4-cyclohexanedicarboxylic acid is more preferred because it is readily available, and high drop impact strength is obtainable therefrom.

Though the other aromatic bifunctional compound than aromatic dicarboxylic acids is not particularly limited, examples thereof include aromatic hydroxycarboxylic acids, such as hydroxybenzoic acid, hydroxytoluic acid, hydroxynaphthoic acid, 3-(hydroxyphenyl)propionic acid, hydroxyphenylacetic acid, and 3-hydroxy-3-phenylpropionic acid; and aromatic diols, such as bisphenol compounds and hydroquinone compounds.

In the case where the polyethylene terephthalate contains a structural unit derived from an aromatic dicarboxylic acid other than terephthalic acid, the aromatic dicarboxylic acid is preferably selected from the group consisting of isophthalic acid, orthophthalic acid, naphthalenedicarboxylic acid, and 4,4'-biphenyldicarboxylic acid. These compounds are low in costs, and a copolymerized polyester resin containing one member of these compounds is easily produced. In the case where the polyethylene terephthalate contains a structural unit derived from such an aromatic dicarboxylic acid, the proportion of the structural unit derived from an aromatic dicarboxylic acid is preferably 1 to 20 mol%, and more preferably 1 to 10 mol% of the dicarboxylic acid unit.

Among these, the aromatic dicarboxylic acid is especially preferably isophthalic acid or naphthalenedicarboxylic acid, and most preferably isophthalic acid. The polyethylene terephthalate containing a structural unit derived from isophthalic acid is excellent in moldability and is excellent from the standpoint of preventing blushing of a molded article to be caused due to the matter that a crystallization rate becomes slow. In addition, the polyethylene terephthalate containing a structural unit derived from naphthalenedicarboxylic acid increases a glass transition point of the resin, improves the heat resistance, and absorbs an ultraviolet ray, and therefore, it is suitably used for the production of a multilayer container which is required to be resistant to an ultraviolet ray. As the naphthalenedicarboxylic acid, 2,6-naphthalenedicarboxylic acid is preferred because it is easily produced and is high in economy.

The polyester resin may also contain a structural unit derived from a monofunctional compound, such as a monocarboxylic acid and a monoalcohol. Specific examples of such a compound include aromatic monofunctional carboxylic acid, such as benzoic acid, *o*-methoxybenzoic acid, *m*-methoxybenzoic acid, *p*-methoxybenzoic acid, *o*-methylbenzoic acid, *m*-methylbenzoic acid, *p*-methylbenzoic acid, 2,3-dimethylbenzoic acid, 2,4-dimethylbenzoic acid, 2,5-dimethylbenzoic acid, 2,6-dimethylbenzoic acid, 3,4-dimethylbenzoic acid, 3,5-dimethylbenzoic acid, 2,4,6-trimethylbenzoic acid, 2,4,6-trimethoxybenzoic acid, 3,4,5-trimethoxybenzoic acid, 1-naphthoic acid, 2-naphthoic acid, 2-biphenylcarboxylic acid, 1-naphthaleneacetic acid, and 2-naphthaleneacetic acid; aliphatic monocarboxylic acids, such as propionic acid, butyric acid, *n*'octanoic acid, *n*-nonanoic acid, myristic acid, pentadecanoic acid, stearic acid, oleic acid, linoleic acid, and linolenic acid; aromatic monoalcohols, such as benzyl alcohol, 2,5-dimethylbenzyl alcohol, 2-phenethyl alcohol, phenol, 1-naphthol, and 2-naphthol; and aliphatic or alicyclic monoalcohols, such as butyl alcohol, hexyl alcohol, octyl alcohol, pentadecyl alcohol, stearyl alcohol, a polyethylene glycol monoalkyl ether, a polypropylene glycol monoalkyl ether, a polytetramethylene glycol monoalkyl ether, oleyl alcohol, and cyclododecanol.

Among these, from the viewpoints of easiness of the production of polyester and production costs thereof, benzoic acid, 2,4,6-trimethoxybenzoic acid, 2-naphthoic acid, stearic acid, and stearyl alcohol are preferred. The proportion of the structural unit derived from the monofunctional compound is preferably 5 mol% or less, more preferably 3 mol% or less, and still more preferably 1 mol% or less relative to the total mol of the entire structural unit of the polyester resin. The monofunctional compound functions as a terminal-sealing agent for end groups or branched chains of the polyester resin molecular chain, thereby suppressing an excessive increase of the molecular weight of the polyester resin and preventing gelation from occurring.

Furthermore, in order to obtain necessary physical properties, the polyester resin may include, as a copolymerization component, a polyfunctional compound having at least three groups selected from a carboxy group, a hydroxy group, and an ester-forming group thereof. Examples of the polyfunctional compound include aromatic polycarboxylic acids, such as trimesic acid, trimellitic acid, 1,2,3-benzenetricarboxylic acid, pyromellitic acid, and 1,4,5,8-naphthalenetetracarboxylic acid; alicyclic polycarboxylic acids, such as 1,3,5-cyclohexanetricarboxylic acid; aromatic polyhydric alcohols, such as 1,3,5-trihydroxybenzene; aliphatic or alicyclic polyhydric alcohols, such as trimethylolpropane, pentaerythritol, glycerin, and 1,3,5-cyclohexanetriol; aromatic hydroxycarboxylic acids, such as 4-hydroxyisophthalic acid, 3-hydroxyisophthalic acid, 2,3-dihydroxybenzoic acid, 2,4-dihydroxybenzoic acid, 2,5-dihydroxybenzoic acid, 2,6-dihydroxybenzoic acid, protocatechuic acid, gallic acid, and 2,4-dihydroxyphenylacetic acid; aliphatic hydroxycarboxylic acids, such as tartaric acid and malic acid; and esters thereof.

The proportion of the structural unit derived from a polyfunctional compound in the polyester resin is preferably less than 0.5 mol% relative to the total molar number of the entire structural unit of the polyester.

Among those mentioned above, from the viewpoints of reactivity and production costs, examples of the preferred polyfunctional compound include trimellitic acid, pyromellitic acid, trimesic acid, trimethylolpropane, and pentaerythritol.

For the production of the polyester resin, a known method, such as direct esterification and trans-esterification, may be applied. Examples of a polycondensation catalyst which is used at the time of production of the polyester resin may include known antimony compounds, such as antimony trioxide and antimony pentoxide; known germanium compounds, such as germanium oxide; and known aluminum compounds, such as aluminum chloride, to which, however, the polycondensation catalyst is not limited. In addition, examples of other production method include a method of subjecting polyester resins of a different kind from each other to trans-esterification through long residence time and/or high-temperature extrusion.

The polyester resin may possibly contain a small amount of a diethylene glycol by-product unit which is a dimer of the ethylene glycol component and is formed in a small amount in a production process of polyester resin. In order that the multilayer container may keep favorable physical properties, it is preferred that the proportion of the diethylene glycol unit in the polyester resin is low as far as possible. The proportion of the structural unit derived from diethylene glycol is preferably 3 mol% or less, more preferably 2 mol% or less, and still more preferably 1 mol% or less relative to the entire structural unit of the polyester resin.

The polyester resin may include a regenerated polyester resin, or a material derived from a used polyester or an industrially recycled polyester (for example, a polyester monomer, a catalyst, and an oligomer).

The polyester resin may be used alone, or may be used in combination of two or more.

Though an intrinsic viscosity of the polyester resin is not particularly limited, it is preferably 0.5 to 2.0 dL/g, and more preferably 0.6 to 1.5 dL/g. When the intrinsic viscosity is 0.5 dL/g or more, the polyester resin has a sufficiently high molecular weight, and hence, the multilayer container can reveal a mechanical property necessary as a structure.

The intrinsic viscosity is one measured by dissolving a polyester resin as a measurement object in a mixed solvent of phenol/1,1,2,2-tetrachloroethane (= 6/4 mass ratio) to prepare 0.2, 0.4, and 0.6 g/dL solutions, followed by measurement at 25°C with an automatic kinematic viscosity tester (Viscotek, manufactured by Malvern Instruments Limited).

(Antioxidant)

In the present invention, the polyester resin composition layer contains an antioxidant. The antioxidant is not particularly limited, and it may be properly selected among known antioxidants.

Examples of the antioxidant include a phenol-based antioxidant, a phosphorus-based antioxidant, a hindered amine-based antioxidant, an aromatic amine-based antioxidant, a sulfur-based antioxidant, and an imidazole-based antioxidant. It is preferred to contain at least one selected from a phenol-based antioxidant and a phosphorus-based antioxidant, and it is more preferred to contain at least one phenol-based antioxidant.

The antioxidant may be used alone, or may be used in combination of two or more. In the case of using a combination of two or more antioxidants, a combination of a phenol-based antioxidant and other antioxidant is preferred, and a combination of a phenol-based antioxidant and a phosphorus-based antioxidant is more preferred.

Specific examples of the phenol-based antioxidant include pentaerythritol tetrakis[3-(3,5-di-*tert*-butyl-4-hydroxyphenyl)propionate] (Irganox 1010, manufactured by BASF SE), 3,9-bis[2-[3-(3-*t*-butyl-4-hydroxy-5-methylphenyl)proplonyloxy]-1,1-dimethylethyl ]-2,4,8,10-tetraoxaspiro[5.5]undecane (Sumilizer GA-80, manufactured by Sumitomo Chemical Co., Ltd.), octadecyl-3-(3,5-di-*tert*-butyl-4-hydroxyphenyl)propionate, thiodiethylene bis[3-(3,5-di-*tert*-butyl-4-hydroxyphenyl)propionate], *N,N'*-hexane-1,6-diylbls[3-(3,5-di-*tert*-butyl-4-hydroxyphenylproplonamide)], 2,4-dimethyl-6-(1-methylpentadecyl)phenol, diethyl[[3,5-bis(1,1-dimethylethyl)-4-hydroxyphenyl]methyl]phosphonate, 3,3',3",5,5',5"-hexa-*tert*-butyl-a,a',a"-(mesitylene-2,4,6-triyl)tri-*p*-cresol, 4,6-bis(octylthiomethyl)-*o*-cresol, ethylenebis(oxyethylene) bis[3-(5-*tert*-butyl-4-hydroxy-*m*-tolyl)propionate], hexamethylene bis[3-(3,5-di-*tert*-butyl-4-hydroxyphenyl)propionate], *N,N'*-hexamethylene bis(3,5-di-*t*-butyl-4-hydroxy-hydrocinnamamide), 1,3,5-tris(3,5-di-*tert*-butyl-4-hydroxybenzyl)-1,3,5-triazine-2,4,6(1*H*,3*H*,5*H*)-trione, and 2,6-di-*tert*-butyl-4-(4,6-bis(octylthio)-1,3,5-triazin-2-ylamino)phenol. These may be used alone, or may be used in admixture of two or more.

Examples of the phosphorus-based antioxidant include triphenyl phosphite, tris(nonylphenyl) phosphite, dilaurylhydrogen phosphite, triethyl phosphite, tridecyl phosphite, tris(2-ethylhexyl) phosphite, tris(tridecyl) phosphite, tristearyl phosphite, diphenylmonodecyl phosphite, monophenyldidecyl phosphite, diphenylmono(tridecyl) phosphite, tetraphenyl dipropylene glycol diphosphite, tetraphenyl tetra(tridecyl)pentaerythritol tetraphosphite, a hydrogenated bisphenol A phenol phosphite polymer, diphenylhydrogen phosphite, 4,4'-butylidene-bis(3-methyl-6-*t*-butylphenyl di(tridecyl) phosphite), tetra(tridecyl)-4,4'-isopropylidenediphenyl diphosphite, bis(tridecyl)pentaerythritol diphosphite, bis(nonylphenyl)pentaerythritol diphosphite, dilaurylpentaerythritol diphosphite, distearylpentaerythritol diphosphite, tris(4-*t*-butylphenyl) phosphite, tris(2,4-di-*t*-butylphenyl) phosphite, a hydrogenated bisphenol A pentaerythritol phosphite polymer, tetrakis(2,4-di- *t*-butylphenyl)-4,4'-biphenylene phosphonite, bis(2,4-di-*t*-butylphenyl)pentaerythritol diphosphite, bis(2,6-di-*t*-butyl-4-methylphenyl)pentaerythritol diphosphite, 2,2'-methylenebis(4,6-di-*t*-butylphenyl)octyl phosphite, ethyl diethylphosphonoacetate, methyl acid phosphate, ethyl acid phosphate, butyl acid phosphate, butoxyethyl acid phosphate, octyl acid phosphate, decyl acid phosphate, lauryl acid phosphate, stearyl acid phosphate, oleyl acid phosphate, behenyl acid phosphate, phenyl acid phosphate, nonylphenyl acid phosphate, cyclohexyl acid phosphate, phenoxyethyl acid phosphate, an alkoxy polyethylene glycol acid phosphate, bisphenol A acid phosphate, diethyl phosphate, dibutyl phosphate, dioctyl phosphate, dilauryl phosphate, distearyl phosphate, diphenyl phosphate, bisnonylphenyl phosphate, hexamethyl phosphoric acid, and 3,9-bis(2,6-di-*t*-butyl-4-methylphenyl)-2,4,8,10-tetraoxa-3,9-diphosphaspiro[5.5]u ndecane. These may be used alone, or may be used in admixture of two or more.

Specific examples of the hindered amine-based antioxidant include bis(2,2,6,6-tetramethyl-4-piperidyl) sebacate. These may be used alone, or may be used in admixture of two or more.

Specific examples of the aromatic amine-based antioxidant include phenyl naphthylamine, 4,4'-dimethoxydiphenylamne, 4,4'-bis($\alpha,\alpha$-dimethylbenzyl)diphenylamine, and 4-isopropoxydiphenylamine. These may be used alone, or may be used in admixture of two or more.

Examples of the sulfur-based antioxidant include didodecyl 3,3'-thiodipropionate, ditetradecyl 3,3'-thiodipropionate, dioctadecyl 3,3'-thiodipropionate, ditridecyl 3,3'-thidipropionate, pentaerythrityl tetrakis(3-dodecylthiopropionate), pentaerythrityl tetrakis(3-tetradecylthiopropionate), and pentaerythrityl tetrakis(3-tridecylthiopropionate). These may be used alone, or may be used in admixture of two or more.

Examples of the imidazole-based antioxidant include 2-mercaptobenzimidazole, a zinc salt of 2-mercaptobenzimidazole, and 2-mercaptomethylbenzimidazole. These may be used alone, or may be used in admixture of two or more.

In the present invention, from the viewpoints of economy and suppression of yellowing at the time of recycle, the content of the antioxidant in the polyester resin composition layer is 0.01 to 1% by mass, preferably 0.02 to 0.8% by mass, more preferably 0.025 to 0.6% by mass, and still more preferably 0.05 to 0.2% by mass.

In the case where two or more layers of the polyester resin composition layer are existent, the content of the antioxidant has only to fall within the aforementioned range as the entire polyester resin composition layer, and a polyester resin composition layer not containing an antioxidant may be existent.

Specifically, in the case where the multilayer container of the present invention has a polyamide resin composition layer sandwiched directly or indirectly between the polyester resin composition layers, only the polyester resin composition layer on the inner layer side or outer layer side of the polyamide resin composition layer may contain the antioxidant, and the polyester resin composition layers on both of the inner layer side and the outer layer side may contain the antioxidant. In the case where only one of the polyester resin composition layers on the inner layer side and the outer layer side contains the antioxidant, in order to suppress any influence of the antioxidant against the contents, it is preferred that the polyester resin composition layer on the outer layer side contains the antioxidant.

Above all, from the viewpoint of production, it is preferred that all of the polyester resin composition layers contain the antioxidant, and it is more preferred that all of the polyester resin composition layers have the same composition.

<Polyamide Resin Composition Layer>

The polyamide resin composition layer is a layer containing a polyamide resin and a cobalt salt.

(Polyamide Resin)

The polyamide resin has a structural unit derived from a diamine (diamine unit) and a structural unit derived from a dicarboxylic acid (dicarboxylic acid unit), 50 mol% or more of the structural unit derived from a diamine being a structural unit derived from xylylenediamine.

In the present invention, by providing the multilayer container with the polyamide resin composition layer containing a polyamide resin, as described above, a high gas barrier property can be brought to the multilayer container. For that reason, it is possible to prevent invasion of oxygen going through a container wall from the outside from occurring and further to prevent vaporization of carbon dioxide of a carbonated beverage to the outside air from occurring. In addition, by using the polyamide resin composition layer as a layer for bringing about a gas barrier property (gas barrier layer), it becomes easy to separate and recover the polyester resin while making the moldability favorable.

By using the polyamide resin having a structural unit derived from xylylenediamine, as described above, the gas barrier performance is readily improved, and on the occasion of recycle, the polyamide resin is readily separated from the polyester resin composition layer, so that an excellent recycle property is revealed.

In the present invention, as for the structural unit derived from a diamine (diamine unit), the polyamide resin contains the structural unit derived from xylylenediamine in a proportion of 50 mol% or more, preferably 70 mol% or more, more preferably 80 to 100 mol%, and still more preferably 90 to 100 mol%.

Though the xylylenediamine is preferably metaxylylenediamine, paraxylylenediamine, or a mixture thereof, it is more preferably metaxylylenediamine. The diamine unit constituting the polyamide resin contains a structural unit derived from metaxylylenediamine in a proportion of preferably 50 mol% or more, more preferably 70 mol% or more, still more preferably 80 to 100 mol%, and yet still more preferably 90 to 100 mol%. When the structural unit derived from metaxylylenediamine in the diamine unit falls within the aforementioned range, the gas barrier property of the polyamide resin becomes more favorable.

Though the diamine unit in the polyamide resin is composed of only the structural unit derived from xylylenediamine, it may contain a structural unit derived from other diamine than the xylylenediamine. Here, examples of the other diamine than the xylylenediamine may include aliphatic diamines having a linear or branched structure, such as ethylenediamine, tetramethylenediamine, pentamethylenediamine, 2-methylpentanediamine, hexamethylenediamine, heptamethylenediamine, octamethylenediamine, nonamethylenediamine, decamethylenediamine, dodecamethylenediamine, 2,2,4-trimethyl-hexamethylenediamine, and 2,4,4-trimethyl-hexamethylenediamine; alicyclic diamines, such as 1,3-bis(aminomethyl)cyclohexane, 1,4-bis(aminomethyl)cyclohexane, 1,3-diaminocyclohexane, 1,4-diaminocyclohexane, bis(4-aminocyclohexyl)methane, 2,2-bis(4-aminocyclohexyl)propane, bis(aminomethyl)decalin, and bis(aminomethyl)tricyclodecane; and diamines having an aromatic ring, such as bis(4-aminophenyl) ether, paraphenylenediamine, and bis(aminomethyl)naphthalene, to which, however, the diamine unit is not limited.

Examples of the compound capable of constituting the dicarboxylic acid unit in the polyamide resin may include $\alpha,\omega$-linear aliphatic dicarboxylic acids having 4 to 20 carbon atoms, such as succinic acid, glutaric acid, adipic acid, pimelic acid, suberic acid, azelaic acid, sebacic acid, undecane diacid, and dodecane diacid; alicyclic dicarboxylic acids, such as 1,4-cyclohexanedicarboxylic acid; other aliphatic dicarboxylic acids, such as a dimer acid; and aromatic dicarboxylic acids, such as terephthalic acid, isophthalic acid, orthophthalic acid, xylylenedicarboxylic acid, and naphthalenedicarboxylic acid, to which, however, the compound is not limited. Among these, $\alpha,\omega$-linear aliphatic dicarboxylic acids having 4 to 20 carbon atoms are preferred, and adipic acid or sebacic acid is more preferred, and from the viewpoint of making the barrier performance favorable, adipic acid is still more preferred.

As for the structural unit derived from a dicarboxylic acid (dicarboxylic acid unit), the polyamide resin contains the structural unit derived from adipic acid in a proportion of preferably 50 mol% or more, more preferably 70 mol% or more, still more preferably 80 to 100 mol%, and yet still more preferably 90 to 100 mol%.

In the polyamide resin, it is especially preferred that not only 50 mol% or more of the diamine unit is a structural unit derived from xylylenediamine (preferably metaxylylenediamine), but also 50 mol% or more of the dicarboxylic acid unit is a structural unit derived from adipic acid; and it is most preferred that not only 80 mol% or more of the diamine unit is a structural unit derived from xylylenediamine (preferably metaxylylenediamine), but also 80 mol% or more of the dicarboxylic acid unit is a structural unit derived from adipic acid. Not only the polyamide resin having such a structural unit is favorable in gas barrier property, but also since its molding processability closely resembles a polyester resin, such as a polyethylene terephthalate resin, the processability of the multilayer container is favorable. In this polyamide resin, one or more of $\alpha,\omega$-linear aliphatic dicarboxylic acids having 4 to 20 carbon atoms (provided that adipic acid is excluded) are preferably used as the compound constituting the dicarboxylic acid unit other than adipic acid.

As the preferred polyamide resin, a polyamide resin, in which 70 mol% or more of the diamine unit is a structural unit derived from xylylenediamine (preferably metaxylylenediamine), 70 to 99 mol% of the dicarboxylic acid unit is a structural unit derived from adipic acid, and 1 to 30 mol% of the dicarboxylic acid unit is a structural unit derived from isophthalic acid, may also be exemplified. It is more preferred that the aforementioned polyamide resin is a polyamide resin, in which 80 mol% or more of the diamine unit is a structural unit derived from xylylenediamine (preferably metaxylylenediamine), 80 to 99 mol% of the dicarboxylic acid unit is a structural unit derived from adipic acid, and 1 to 20 mol% of the dicarboxylic acid unit is a structural unit derived from isophthalic acid.

When the structural unit derived from isophthalic acid is added as the dicarboxylic acid unit, the melting point is decreased, whereby the molding processing temperature can be decreased, and therefore, thermal deterioration during molding can be suppressed. In addition, by delaying the crystallization time, the stretch moldability is improved.

Besides the aforementioned diamine and dicarboxylic acid, as components constituting the polyamide resin, a lactam, such as $\varepsilon$-caprolactam and laurolactam; an aliphatic aminocarboxylic acid, such as aminocaproic acid and aminoundecanoic acid; or an aromatic aminocarboxylic acid, such as *p*-aminomethylbenzoic acid may also be used as the copolymerization component within a range where the effects of the present invention are not impaired.

In the present invention, it is preferred that the polyamide resin is produced through a polycondensation reaction in the molten state (hereinafter also referred to as "melt polycondensation"). For example, it is preferred that the polyamide resin is produced by a method in which a nylon salt composed of a diamine and a dicarboxylic acid is subjected to temperature rise by means of pressurization in the presence of water and polymerized in the molten state while removing the water added and condensed water. In addition, the polyamide resin may also be produced by a method in which the diamine is added directly to the dicarboxylic acid in the molten state, and the contents are polycondensed under atmospheric pressure. In this case, in order to hold the reaction system in a uniform liquid state, it is preferred that the diamine is continuously added to the dicarboxylic acid, and meanwhile, the polycondensation is allowed to proceed while subjecting the reaction system to temperature rise such that the reaction temperature does not drop lower than the melting points of the produced oligoamide and polyamide. In addition, in the polyamide resin, the molecular weight may also be increased by further subjecting the product obtained through melt polycondensation to solid-phase polymerization, as the need arises.

The polyamide resin may be subjected to polycondensation in the presence of a phosphorus atom-containing compound. When the polyamide resin is subjected to polycondensation in the presence of a phosphorus atom-containing compound, the processing stability at the time of melt molding is enhanced, and coloration is readily suppressed.

Preferred specific examples of the phosphorus atom-containing compound include a hypophosphorous acid compound (also referred to as a phosphonic acid compound or a phosphonous acid compound) and a phosphorous acid compound (also referred to as a phosphonic acid compound), to which, however, the compound is not particularly limited. Though the phosphorus atom containing-compound may be an organic metal salt, above all, an alkali metal salt is preferred.

Specific examples of the hypophosphorous acid compound include hypophosphorous acid; metal salts of hypophosphorous acid, such as sodium hypophosphite, potassium hypophosphite, lithium hypophosphite, and calcium hypophosphite; hypophosphorous acid compounds, such as ethyl hypophosphite, dimethylphosphinic acid, phenylmethylphosphinic acid, phenylphosphonous acid, and ethyl phenylphosphonite; and metal salts of phenylphosphonous acid, such as sodium phenylphosphonite, potassium phenylphosphonite, and lithium phenylphosphonite.

Specific examples of the phosphorous acid compound include phosphorous acid and pyrophosphorous acid; metal salts of phosphorous acid, such as disodium hydrogen phosphite, sodium phosphite, potassium phosphite, and calcium phosphite; phosphorous acid compounds, such as triethyl phosphite, triphenyl phosphite, ethylphosphonic acid, phenylphosphonic acid, and diethyl phenylphosphonate; metal salts of an alkylphosphonic acid, such as sodium ethylphosphonate and potassium ethylphosphonate; and metal salts of phenylphosphonic acid, such as sodium phenylphosphonate, potassium phenylphosphonate, and lithium phenylphosphonate.

Among those, the phosphorus atom-containing compound may be used alone, or may be used in combination of two or more. Among those, from the viewpoint of an effect for promoting the polymerization reaction of the polyamide resin as well as the viewpoint of an effect for preventing coloration from occurring, metal salts of hypophosphorous acid, such as sodium hypophosphite, potassium hypophosphite, lithium hypophosphite, and calcium hypophosphite are preferred, with sodium hypophosphite being more preferred.

It is preferred that the polycondensation of the polyamide resin is conducted in the presence of a phosphorus atom-containing compound and an alkali metal compound. In order to prevent coloration of the polyamide resin during the polycondensation from occurring, it is necessary to make a sufficient amount of the phosphorus atom-containing compound exist. However, if the use amount of the phosphorus atom-containing compound is excessively large, there is a concern that an amidation reaction rate is excessively promoted, so that gelation of the polyamide resin is brought. For that reason, from the viewpoint of regulating the amidation reaction rate, it is preferred to make an alkali metal compound coexist.

Though the alkali metal compound is not particularly limited, preferably, specific examples thereof may include alkali metal hydroxides and alkali metal acetates. Examples of the alkali metal hydroxide may include lithium hydroxide, sodium hydroxide, potassium hydroxide, rubidium hydroxide, and cesium hydroxide; and examples of the alkali metal acetate may include lithium acetate, sodium acetate, potassium acetate, rubidium acetate, and cesium acetate.

In the case of using the alkali metal compound on the occasion of polycondensation of the polyamide resin, from the viewpoint of suppressing the formation of a gel, the use amount of the alkali metal compound is within a range of preferably from 0.5 to 1, more preferably from 0.55 to 0.95, and still more preferably from 0.6 to 0.9 in terms of a value obtained by diving the molar number of the alkali metal compound by the molar number of the phosphorus atom-containing compound.

Though a number average molecular weight of the polyamide resin is properly selected according to an application of the multilayer container or the molding method, from the viewpoint of moldability or strength of the multilayer container, it is preferably 10,000 to 60,000. From the aforementioned viewpoint, the number average molecular weight of the polyamide resin is more preferably 11,000 to 50,000.

The number average molecular weight of the polyamide resin is calculated according to the following equation

(1).

$$\text{Number average molecular weight} = 2 \times 1{,}000{,}000/([COOH] + [NH_2])\,(1)$$

In the equation, [COOH] represents a terminal carboxy group concentration ($\mu$mol/g) in the polyamide resin; and [NH$_2$] represents a terminal amino group concentration ($\mu$mol/g) in the polyamide resin.

Here, as the terminal amino group concentration, a value obtained by subjecting a solution of the polyamide resin in a phenol/ethanol mixed solution to neutralization titration with a dilute hydrochloric acid aqueous solution, followed by calculation is used; and as the terminal carboxy group concentration, a value obtained by subjecting a solution of the polyamide in benzyl alcohol to neutralization titration with a sodium hydroxide aqueous solution, followed by calculation is used.

In the present invention, from the viewpoint of suppressing yellowing of the regenerated polyester resin, an amino group concentration of the polyamide resin (Y) is preferably 50 $\mu$mol/g or less, more preferably 45 $\mu$mol/g or less, still more preferably 40 $\mu$mol/g or less, still more preferably 30 $\mu$mol/g or less, and especially preferably 20 $\mu$mol/g or less.

The amino group concentration of the polyamide resin is determined in a manner in which the polyamide resin is precisely weighed and dissolved in a phenol/ethanol (4/1 by volume) solution at 20 to 30°C while stirring, after the polyamide resin is completely dissolved, the inner wall of the container is washed away with 5 mL of methanol while stirring, and the resultant is subjected to neutral titration with a 0.01 mol/L hydrochloric acid aqueous solution.

Though a method of regulating the amino group concentration of the polyamide resin is not particularly limited, the amino group concentration can be controlled low by a method in which a charge ratio (molar ratio) of the diamine and the dicarboxylic acid is regulated to undergo the polycondensation reaction; a method in which a monocarboxylic acid capable of capping an amino group is charged together with the diamine and the dicarboxylic acid to undergo the polycondensation reaction; a method in which after undergoing the polycondensation reaction, the resultant is allowed to react with a carboxylic acid capable of capping an amino group.

(Cobalt Salt)

In the present invention, for the purpose of inducing an oxidation reaction of the polyamide resin to enhance an oxygen absorption function and to more enhance the gas barrier property, the polyamide resin composition layer contains a cobalt salt.

The cobalt salt is used in a form of a low-valence oxide, an inorganic acid salt, an organic acid salt, or a complex salt each containing cobalt, and the cobalt salt is preferably an inorganic acid salt, an organic acid salt, or a complex salt, and more preferably an organic acid salt.

Examples of the inorganic acid salt include halides, such as a chloride and a bromide, carbonates, sulfates, nitrates, phosphates, and silicates. Meanwhile, examples of the organic acid salt include carboxylates, sulfonates, and phosphonates. In addition, transition metal complexes with a $\beta$-diketone or a $\beta$-keto acid ester can also be utilized.

In the present invention, from the viewpoint of favorably revealing oxygen absorption ability, it is preferred to use at least one selected from the group consisting of a carboxylate, a carbonate, an acetylacetonate complex, an oxide, and a halide each containing cobalt; it is more preferred to use at least one selected from the group consisting of an octanoate, a neodecanoate, a naphthenate, a stearate, an acetate, a carbonate, and an acetylacetonate complex each containing cobalt; and it is still more preferred to use a cobalt carboxylate, such as cobalt octanoate, cobalt naphthenate, cobalt acetate, and cobalt stearate.

The aforementioned cobalt salt may be used alone, or may be used in combination of two or more.

From the viewpoints of enhancing the gas barrier property and suppressing yellowing of the regenerated polyester resin, the content of the cobalt salt in the polyamide resin composition is preferably 100 to 1,000 ppm, more preferably 120 to 800 ppm, still more preferably 150 to 600 ppm, and yet still more preferably 200 to 500 ppm as expressed in terms of cobalt. The term "as expressed in terms of cobalt" means the content of cobalt per se in the compound containing cobalt. The "ppm" is on a mass basis.

(Other Components)

The polyester resin composition layer and the polyamide resin composition layer may contain various additive components. Examples of the additive component include a coloring agent, a heat stabilizer, a light stabilizer, a moistureproof agent, a waterproof agent, a lubricant, and a spreader.

From the viewpoint of maintaining the high oxygen barrier property, it is preferred that the polyamide resin composition layer does not contain an antioxidant. The content of the antioxidant in the polyamide resin composition layer is preferably 0.01% by mass or less, more preferably 0.001% by mass or less, and still more preferably 0.0001% by mass or less. Especially preferably, the polyamide resin composition layer does not contain the antioxidant. The aforementioned antioxidant is one excluding the phosphorus atom-containing compound which is existent at the time of polymerization of the polyamide resin as described above.

In order that the cobalt salt may exhibit an effect for improving the oxygen barrier property, a specified structure, such as one derived from xylylenediamine, is necessary, and even if the polyester resin composition layer contains the cobalt salt, the effect for improving the oxygen barrier property is not exhibited. In consequence, it is preferred that the polyester resin composition layer does not contain the cobalt salt.

Each of the polyester resin composition layer and the polyamide resin composition layer may contain other resin component than the polyester resin (X) and the polyamide resin (Y) within a range where the object of the present invention is not deviated. In the polyester resin composition layer, the polyester resin (X) serves as a main component, and specifically, the content of the polyester resin (X) is preferably 80 to 100% by mass, and more preferably 90 to 100% by mass relative to the resin amount of the entire layer.

The content of the polyamide resin (Y) in the polyamide resin composition layer is preferably 10 to 100% by mass, more preferably 20 to 100% by mass, and still more preferably 25 to 100% by mass relative to the resin amount of the entire layer. In the polyamide resin composition, in order to improve delamination resistance between the polyester resin composition layer and the polyamide resin composition layer (resistance to layer separation between the polyester resin composition layer and the polyamide resin composition layer), in addition to the polyamide resin (Y), a polyester resin may be added in the polyamide resin composition layer. In this case, the content of the polyamide resin (Y) in the polyamide resin composition is preferably 10 to 50% by mass, and more preferably 20 to 45% by mass, and the content of the polyester resin is preferably 50 to 90% by mass, and more preferably 55 to 80% by mass.

Above all, it is preferred that the polyester resin composition layer contains a coloring agent, and from the standpoint of functioning as a complementary color against the yellowing, it is preferred that the polyester resin composition layer contains a blue or purple coloring agent. The content of the blue or purple coloring agent in the polyester resin composition layer is preferably 0.1 to 100 ppm, more preferably 0.5 to 50 ppm, and still more preferably 1 to 30 ppm relative to the polyester resin (X).

<Multilayer Container>

The multilayer container of the present invention is preferably a hollow container, and in the case where the multilayer container is a hollow container, a body thereof has at least a multilayer laminated structure.

The content of the polyamide resin (Y) is preferably 1.0 to 15% by mass, more preferably 1.5 to 12% by mass, and still more preferably 2.0 to 8% by mass relative to a sum total of the polyester resin composition layer and the polyamide resin composition layer.

In the body, a ratio of a thickness (E) of the polyester resin composition layer to a thickness (A) of the polyamide resin composition layer (thickness ratio: E/A) is preferably 2.5 or more and 200 or less. The thickness of the polyester resin composition layer means an average thickness, and in the body, in the case where the polyester resin composition layer is composed of plural layers, the thicknesses of the plural layers are averaged to determine an average thickness per layer. The thickness of the polyamide resin composition layer is also the same.

When the thickness ratio E/A is 2.5 or more, in a fractionation process in the production method of a regenerated polyester resin, particularly air classification or gravity separation, it is easy to fractionate the polyamide resin from the polyester resin, and hence, such is preferred. When the thickness ratio E/A is 200 or less, the gas barrier performance of the hollow container is easily secured, and the storage performance of the contents is improved, and hence, such is preferred.

From the viewpoint of making the gas barrier property of the hollow container favorable while enhancing the fractionation property in the fractionation process, the thickness ratio (E/A) is more preferably 3 to 50, and still more preferably 4 to 15.

In the case where the multilayer container is a hollow container, a total thickness in the body of the hollow container (namely, a total thickness of all of the layers of the body) is within a range of preferably from 100 $\mu$m to 5 mm, more preferably from 150 $\mu$m to 3 mm, and still more preferably from 200 $\mu$m to 2 mm. The thickness (E) of each polyester resin composition layer is within a range of preferably from 50 $\mu$m to 2 mm, more preferably from 75 $\mu$m to 1 mm, and still more preferably from 100 $\mu$m to 500 $\mu$m. The thickness (A) of each polyamide resin composition layer is within a range of preferably from 1 to 200 $\mu$m, more preferably from 3 to 100 $\mu$m, and still more preferably from 10 to 50 $\mu$m. In the present invention, by allowing the polyamide resin composition layer to fall within such a thickness range, in the fractionation process as mentioned later, the polyamide resin is readily fractionated from the polyester resin while securing the gas barrier property.

Though the multilayer container of the present invention is one having at least one layer of each of the polyester resin composition layer and the polyamide resin composition layer, it may have other layer than the polyester resin composition layer and the polyamide resin composition layer. Specifically, examples of the other layer include a resin layer or adhesive layer which is made to intervene between the polyester resin composition layer and the polyamide resin composition layer and adheres these resin composition layers to each other. However, from the viewpoint of improving heat resistance and molding processability as well as a fractionation property at the time of recycle, it is preferred that the resin layer or the adhesive layer is made to not intervene between the polyester resin composition layer and the polyamide resin composition layer.

It is preferred that the multilayer container of the present invention has two or more layers of the polyester resin composition layer, and it is more preferred that the multilayer container has the polyamide resin composition layer sandwiched directly or indirectly between two layers of the polyester resin composition layer. In this case, the multilayer container may have at least one other layer between the polyester resin composition layer and the polyamide resin composition layer, and the multilayer container may have at least one other layer on an opposite surface of the polyester resin composition layer to the surface on which the polyamide resin composition layer is provided directly or indirectly, to which, however, the multilayer container is not particularly limited.

That is, the multilayer container is preferably one having a multilayer laminated structure in which at least one polyamide resin composition layer to be disposed between a pair of the polyester resin composition layers is contained as an interlayer. In addition, in the multilayer laminated structure, it is more preferred that an outermost layer and an innermost layer are the polyester resin composition layer. When the polyester resin composition layer is abbreviated as "PES", and the polyamide resin composition layer is abbreviated as "PA", the multilayer container preferably has a multilayer laminated structure composed of a three-layer structure of "PES/PA/PES" or a five-layer structure of "PES/PA/PES/PA/PES", and more preferably has a three-layer structure of "PES/PA/PES" having the polyamide resin composition layer sandwiched between the polyester resin composition layers, to which, however, the multilayer container is not limited.

An induction period until an oxygen absorption performance of the multilayer container having the polyester resin composition layer and the polyamide resin composition layer is revealed, and a revelation period of oxygen absorption vary with the position of the polyamide resin composition layer or the capacity of the multilayer container. In general, from the viewpoint of taking a balance between the delamination resistance and the oxygen absorption performance, the position of the polyamide resin composition layer is preferably from a lower part of the support ring of the multilayer container until a position of 20 to 40 mm from the injection gate center of the multilayer container. Meanwhile, in the case of attaching importance to the oxygen absorption performance, the position of the polyamide resin composition layer is preferably from an upper part of the support ring until the vicinity of the injection gate. It is also preferred that the thickness of the polyamide resin composition layer is made thick.

The oxygen absorption performance also varies with the capacity of the multilayer container. So long as the mass of the multilayer container is identical, from the viewpoint of oxygen absorption performance, a multilayer container having a capacity of 280 to 350 mL is more preferred than a multilayer container having a capacity of 500 mL.

The multilayer container of the present invention is preferably a hollow container, more preferably a packaging container for liquid, which is used upon being filled with a liquid in the inside of a hollow container, and still more preferably a packaging container for beverage. Examples of the liquid to be filled in the inside may include various products, such as beverages,; e.g., water, carbonated water, hydrogen water, milk, dairy products, juices, coffee, coffee beverages, carbonated soft drinks, teas, alcoholic beverages, liquid seasonings, e.g., sauce, soy sauce, syrup, sweet sake, dressing,; chemicals, e.g., agrochemicals, insecticides,; medical and pharmaceutical products; and detergents. In particular, there are preferably exemplified beverages or carbonated beverages which are liable to be deteriorated in the presence of oxygen, for example, beers, wines, coffee, coffee beverages, fruit juices, carbonated soft drinks, carbonated water, or teas.

The multilayer container of the present invention is excellent in oxygen barrier property, and the oxygen barrier property of the container (cc/bottle·day·0.21 atm) is preferably 0.040 or less, more preferably 0.035 or less, still more preferably 0.030 or less, and yet still more preferably 0.015 or less. The aforementioned oxygen barrier property is on a basis of the container fabricated in each of the Examples as mentioned later.

The oxygen barrier property of the container can be evaluated through an oxygen permeability test by the MOCON method in conformity with ASTM D3985. For the measurement, OX-TRAN2/61, manufactured by MOCON Inc. is used; 100 mL of water is filled in the obtained 500-mL bottle; nitrogen at 1 atm is made to flow into the inside of the bottle at a rate of 20 mL/min under a condition of an oxygen partial pressure of 0.21 atm at a temperature of 23°C and at a bottle internal humidity of 100% RH, and an external humidity of 50% RH; and oxygen contained in the nitrogen after flowing in the inside of the bottle is detected by a coulometric sensor.

<Production Method of Multilayer Container>

In the present invention, though the production method of the multilayer container is not particularly limited, it preferably includes the following step (S1) to step (S3).

Step (S1): A step of previously mixing the polyester resin (X) and the antioxidant to prepare a polyester resin mixture or a polyester resin composition.

Step (S2): A step of previously mixing the polyamide resin (Y) and the cobalt salt to prepare a polyamide resin mixture or a polyamide resin composition.

Step (S3): A step of extruding the polyester resin mixture or polyester resin composition from a first extruder and extruding the polyamide resin mixture or polyamide resin composition from a second extruder, respectively, followed by molding.

In the step (S1), the polyester resin (X) and the antioxidant are mixed to prepare a polyester resin mixture or a polyester resin composition. The mixing may be either drying blending or melt blending (melt kneading). That is, the polyester resin (X) and the antioxidant may be subjected to dry blending to prepare a polyester resin mixture; the polyester resin (X) and the antioxidant may be subjected to melt blending to prepare a polyester resin composition; or the polyester resin (X) and the antioxidant may be subjected to melt blending, followed by further dry blending of the polyester resin (X), to prepare the polyester resin composition. Above all, from the viewpoint of minimizing thermal history, the dry blending is preferred. Here, the dry blending means mechanical mixing in a particulate or pellet-like form. For mixing, a mixing device, such as a tumbler mixer, a ribbon mixer, a Henschel mixer, and a Banbury mixer, may be used. Alternatively, on the occasion of subjecting to molding processing, by supplying a predetermined amount of the antioxidant by a feeder (or a liquid addition device) different from a supply feeder of the polyester resin (X), a polyester resin mixture may be formed immediately before the step (S3).

In the case of melt kneading the polyester resin (X) and the antioxidant, though a temperature in melt kneading is not particularly limited, from the viewpoint that the polyester resin is thoroughly melted and thoroughly kneaded with the antioxidant, it is preferably 300 to 255°C, more preferably 290 to 260°C, and still more preferably 285 to 265°C. In addition, though a time of melt kneading is not particularly limited, from the viewpoint that the polyester resin (X) and the antioxidant are uniformly mixed, it is preferably 10 to 600 seconds, more preferably 20 to 400 seconds, and still more preferably 30 to 300 seconds. Though a device which is used for melt kneading is not particularly limited, examples thereof include an open type mixing roll, a non-open type Banbury mixer, a kneader, and a continuous kneading machine (e.g., a uniaxial kneading machine, a biaxial kneading machine, a multiaxial kneading machine).

In the step (S2), the polyamide resin (Y) and the cobalt salt are mixed to prepare a polyamide resin mixture or a polyamide resin composition. The mixing may be either drying blending or melt blending (melt kneading). That is, the polyamide resin (Y) and the cobalt salt may be subjected to dry blending to prepare a polyamide resin mixture; or the polyamide resin (Y) and the cobalt salt may be subjected to melt blending to prepare a polyamide resin composition. Above all, from the viewpoint of minimizing thermal history, the dry blending is preferred. For mixing, the same mixing device as in the aforementioned step (S1) is adopted. Alternatively, on the occasion of subjecting to molding processing, by supplying a predetermined amount of the cobalt salt by a feeder (or a liquid addition device) different from a supply feeder of the polyamide resin (Y), a polyamide resin mixture may be formed immediately before the step (S3).

In the case of melt kneading the polyamide resin (Y) and the cobalt salt, though a temperature in melt kneading is not particularly limited, from the viewpoint that the polyamide resin is thoroughly melted and thoroughly kneaded with the cobalt salt, it is preferably 300 to 245°C, more preferably 290 to 250°C, and still more preferably 280 to 255°C. In addition, though a time of melt kneading is not particularly limited, from the viewpoint that the polyamide resin (Y) and the cobalt salt are uniformly mixed, it is preferably 10 to 600 seconds, more preferably 20 to 400 seconds, and still more preferably 30 to 300 seconds. Though a device which is used for melt kneading is not particularly limited, examples thereof include an open type mixing roll, a non-open type Banbury mixer, a kneader, and a continuous kneading machine (e.g., a uniaxial kneading machine, a biaxial kneading machine, a multiaxial kneading machine).

In the step (S3), the polyester resin composition is extruded from a first extruder, and the polyamide resin composition is extruded from a second extruder, followed by molding. More specifically, the step (S3) is preferably a step of molding a multilayer preform by means of extrusion molding, coinjection molding, compression molding.

In the extrusion molding, the polyester resin composition and the polyamide resin composition are subjected to coextrusion molding to mold a multilayer preform.

In the coinjection molding, the polyester resin composition and the polyamide resin composition are extruded into dies, respectively and then subjected to coinjection molding to mold a multilayer preform.

In the compression molding, there is exemplified a method in which the polyamide resin composition in the heat-melted state is intermittently extruded into an extrusion channel where the polyester resin composition in the heat-melted state flows, and the polyester resin composition surrounding the substantially whole of the extruded polyamide resin composition is extruded from an extrusion port of the extrusion channel and properly supplied as a molten resin molding material into a molding die, followed by compression molding to mold a multilayer preform.

Among these, from the viewpoint of productivity, the coinjection molding is preferred.

In the present invention, it is preferred that after the aforementioned step (S3), a step of subjecting the multilayer preform to blow molding is included.

The multilayer preform (multilayer parison) obtained in the step (S3) may be molded by means of direct blowing, or may be molded by means of stretch blowing, to which, however, the molding is not particularly limited.

Among these, as for the production method of the multilayer container of the present invention, in the step (S3), a method in which the multilayer preform obtained by extrusion molding is subjected to direct blow molding, or a method in which the multilayer preform obtained by coinjection molding is subjected to stretch blow molding, is preferred, and a method in which the multilayer preform obtained by coinjection molding is subjected to biaxial stretch blow molding is more preferred. As for a condition of biaxial stretch blow molding, it is preferred to set a preform heating temperature to 95 to 110°C, a primary blow pressure to 0.5 to 1.2 MPa, and a secondary blow pressure to 2.0 to 2.6 MPa, respectively. In this way, the generation of thickness unevenness or stretch unevenness is suppressed, and a multilayer container with excellent strength can be obtained.

[Production Method of Regenerated Polyester]

As described above, the multilayer container of the present invention is suitable for recycle and is preferably a multilayer container for recycle. The multilayer container of the present invention is preferably used for polyester recycle.

The kind of recycle is not particularly limited and may be any of material recycle, chemical recycle, and mechanical recycle. The recycle is preferably material recycle or mechanical recycle, and more preferably mechanical recycle.

Here, the material recycle is one in which the multilayer container is milled and washed to obtain a flake, or the aforementioned flake is further repelletized to obtain a pellet. In addition, the chemical recycle is one in which the multilayer container is decomposed to a monomer level and then again polymerized to obtain a polyester resin. The mechanical recycle is one in which the multilayer container is milled and washed to obtain a flake, the flake is further repelletized to obtain a pellet, and the pellet is then subjected to crystallization and/or solid-phase polymerization to have a high molecular weight, thereby forming a regenerated polyester.

It is possible to produce the regenerated polyester using the multilayer container of the present invention as a raw material. In the present invention, the production method of the regenerated polyester is not particularly limited so long as it is a method in which the polyester resin is recovered from the multilayer container of the present invention to produce the regenerated polyester.

The production method of the regenerated polyester from the multilayer container is preferably a method in which the whole or a part of the polyamide resin composition layer is removed from the aforementioned multilayer container to recover the polyester constituting the polyester resin composition layer, thereby forming the instant polyester as the regenerated polyester. The production method of the regenerated polyester from the multilayer container is not limited to the aforementioned method but may also be a method in which the regenerated polyester is produced without going through the step of removing the polyamide resin.

The production method of the regenerated polyester of the present invention is hereunder described in detail.

In the present production method, as the multilayer container, in general, a spent product is used, but an unspent product may also be used. Examples of the spent multilayer container include one resulting from recovery after being once distributed in the market.

In the present production method, first of all, in the case where a lid is installed in the multilayer container, it is preferred that the lid is taken away from the multilayer container, and thereafter, a step of removing the polyamide resin composition layer (hereinafter also referred to as "removal step") is conducted. In addition, in the case where the lid is already taken away from the multilayer container, it is preferred that the multilayer container from which the lid has been taken away is subjected to the removal step.

<Removal Step>

Though the removal step is not particularly limited so long as it is a step of removing the polyamide resin composition to selectively take away the polyester resin composition, for example, it is preferably a step of milling the multilayer container and then fractionating the polyester resin composition and the polyamide resin composition from each other.

The milling of the multilayer container can be conducted using a milling machine, such as a uniaxial milling machine, a biaxial milling machine, a triaxial milling machine, and a cutter mill. The milled product obtained by milling is, for example, in a flake-shape, powder-shape, or block-shape form. However, in the multilayer container, a portion having a thin multilayer laminated structure having a thickness of several mm or less, such as a body, is the majority, and therefore, in general, the majority of the milled product is in a flake-shape form. The milled product in a flake-shape form refers to one in the flaky or flat state having a thickness of about 2 mm or less.

In the multilayer laminated structure, the polyester resin composition layer and the polyamide resin composition layer are integrated from the structural standpoint. However, in general, these do not adhere to each other, but in the milling step, the polyester resin composition layer and the polyamide resin composition layer are readily separated as a different milled product from each other. In addition, when the milled product is made flaky, it is flung up by an air flow of air classification as mentioned later and easily separated into the polyester resin composition layer and the polyamide resin composition layer, respectively.

However, the polyester resin composition layer and the polyamide resin composition layer cannot be always completely separated from each other in the milling step, but the milled product is separated into a material having a relatively high content of the polyester resin composition layer, a material having a relatively low content of the polyester resin composition layer, and a material having a relatively high content of the polyamide resin composition layer. As a matter of convenience for explanation, the material having a relatively high content of the polyester resin composition layer is referred to simply as the polyester, and the material having a relatively high content of the polyamide resin composition layer is referred to simply as the polyamide.

As described above, the milled product is fractionated into the polyester and the polyamide (fractionation step). As the fractionation method, it is preferred to adopt gravidity classification utilizing a difference in specific gravity between the polyester resin composition and the polyamide resin composition.

Specifically, examples of the gravity classification include air classification of conducting classification of the milled product by a wind force. Examples of the air classification include a method in which in a separation device capable of generating a rotary air flow in the inside thereof, the milled product exposed to the air flow generated in the separation device is fractionated and recovered as one having a large specific gravity or bulk density and naturally dropping due to the own weight and one having a small specific gravity or bulk density and being flung up by the air flow, respectively.

According to this method, the milled product of the polyester resin composition naturally drops due to the own weight, whereas the milled product of the polyamide resin composition is flung up, and therefore, it becomes possible to fractionate and recover the polyester and the polyamide, respectively.

In such air classification, the same milled product may be repeatedly subjected to the same operation. For example, the milled product which has naturally dropped may be further subjected to air classification, thereby increasing the content of the polyester in the regenerated polyester.

The fractionation method is not limited to the air classification, and examples thereof include a method in which the milled product is dipped in a liquid, such as water, and fractionated due to a difference in specific gravity against the liquid between the milled products; and a method in which a fixed vibration is given to the milled product, thereby separating and fractionating the milled products having a different specific gravity from each other.

<Granulation Step>

In order to make handling at the time of molding processing or the like easy, it is preferred that the recovered polyester (regenerated polyester) is granulated to form a pellet.

Though the granulation may be conducted either before or after a crystallization/solid-phase polymerization step as mentioned later, it is suitable to conduct the granulation before the crystallization/solid-phase polymerization step. By conducting the granulation before the crystallization/solid-phase polymerization step, the handling property in the crystallization/solid-phase polymerization step becomes favorable, too.

In the granulation step, it is preferred that the milled product is plasticized and granulated by means of melt blending. Though examples of a granulation device for undergoing the plasticization and granulation include a uniaxial extruder, a biaxial extruder, and a multiaxial extruder, any known devices can be used. A shape of the pellet is preferably a columnar shape, a spherical shape, or an oval spherical shape.

It is preferred that the granulation is, for example, conducted by a method in which the plasticized regenerated polyester is extruded into a strand form and cut by a pelletizer while cooling with a water tank, thereby undergoing pelletization. The pellet taken away from the water tank is generally dried for the purpose of removing the moisture attached onto the surface thereof.

<Crystallization/Solid-phase Polymerization Step>

It is preferred that the recovered regenerated polyester is subjected to at least one step selected from the group consisting of a crystallization step and a solid-phase polymerization step. That is, it is preferred to conduct the crystallization/solid-phase polymerization step of conducting crystallization, solid-phase polymerization, or both of them. However, in the present step, it is more preferred to conduct both of crystallization and solid-phase polymerization. Though it is preferred to apply the crystallization/solid-phase polymerization step to the aforementioned pelletized polyester, it may also be applied to a non-pelletized material (for example, the milled product).

In the case of conducting both of crystallization and solid-phase polymerization, it is preferred that after crystallization of the regenerated polyester, the solid-phase polymerization is applied.

The crystallization of the regenerated polyester is conducted by holding the polyester under fixed heating. It is preferred to undergo the crystallization by heating the polyester at, for example, 100 to 230°C. When the regenerated polyester is crystallized, fusion of the regenerated polyesters with each other or attachment of the polyester onto the inner surface of the device at the time of solid-phase polymerization is prevented from occurring.

It is preferred that the solid-phase polymerization is conducted at a temperature of [(melting point of polyester) - 80°C] or higher and lower than the melting point of the polyester for a fixed time. When the temperature is controlled to lower than the melting point of the polyester, melting of the regenerated polyester is prevented from occurring, and for example, a lowering of work efficiency to be caused due to attachment of the regenerated polyester onto the surface of the device is prevented from occurring. In addition, when the temperature is controlled to [(melting point of polyester) - 80°C] or higher, the polymerization proceeds at a sufficient polymerization rate, so that desired physical properties are readily obtained.

The solid-phase polymerization may be carried out under vacuum, and it may also be carried out in an inert gas stream of nitrogen, argon, or the like. In the case of carrying out the solid-phase polymerization under vacuum, a degree of vacuum is preferably 1.0 torr (133.3 Pa) or less, more preferably 0.5 torr (66.7 Pa) or less, and still more preferably 0.1 torr (13.3 Pa) or less. In addition, in carrying out the solid-phase polymerization either under vacuum or in an inert gas stream of nitrogen, argon, or the like, it is preferred to make the concentration of oxygen retaining in the system low as far as possible, and the concentration of oxygen is preferably 300 ppm or less, and more preferably 30 ppm or less. By regulating the concentration of oxygen to 30 ppm or less, an appearance failure, such as yellowing, hardly occurs.

In the case of carrying out the solid-phase polymerization under vacuum, it is preferred to keep the heat transfer uniform while always repeating stirring or mixing of the regenerated polyester. In the case of carrying out the solid-phase polymerization in the presence of an inert gas, it is preferred to always keep the surface of the polyester in a contacting state with a dry gas in a dry gas stream.

Examples of a solid-phase polymerization device for undergoing the crystallization/solid-phase polymerization step include a tumbler type batchwise device installed with a heating jacket, a dry silo type device equipped with inert gas stream equipment, and a crystallization device or reactor equipped with a stirring blade and a discharge screw in the inside thereof. It is preferred to undergo the crystallization and the solid-phase polymerization continuously or simultaneously by the same device.

Though a heating time of the solid-phase polymerization is properly determined taking into consideration the device and other conditions, a time for which the polyester obtains sufficient physical properties is enough.

In the solid-phase polymerization, the regenerated polyester is held at a high temperature for a long time, and therefore, there is a case where if impurities are present in the regenerated polyester, the quality, such as color tone, is deteriorated. In the aforementioned removal step, it is preferred that a majority of the polyamide is removed. In this case, the deterioration of the quality which is possibly generated at the time of solid-phase polymerization is minimized.

In the production method of the regenerated polyester of the present invention, other step than the above-explained steps may be carried out, and in order to remove the contents attached in the inside of the multilayer container, a washing step may be conducted. For washing, rinse with a liquid is preferred, and washing with water or washing with an alkaline aqueous solution, or both of them may be conducted.

Though the washing may be conducted either before or after the multilayer container is milled into a milled product, it is preferably conducted before conducting any one of granulation, crystallization, and solid-phase polymerization. Furthermore, the washing step may be conducted simultaneously with the milling step using a milling machine called a wet milling machine, in which washing and milling are conducted at the same time.

In the case where the washing step is conducted, a drying step may be conducted after the washing step. By undergoing the drying step, the amount of moisture of the regenerated polyester obtained by the present method can be reduced, and therefore, it becomes possible to provide a high-quality regenerated polyester which is high in heat stability. The drying step can be, for example, conducted by blowing air or hot air by a dryer.

In the case where the production method of the regenerated polyester includes the removal step of the polyamide resin composition, in the obtained regenerated polyester, the content of the polyamide resin composition is preferably less than 1.5% by mass, more preferably less than 1% by mass, still more preferably less than 0.8% by mass, and yet still more preferably less than 0.6% by mass. In this way, by reducing the content of the polyamide resin, deterioration in color tone, to be caused due to the polyamide resin composition, is prevented from occurring, and it becomes easy to make the quality of the regenerated polyester favorable.

The multilayer container of the present invention is excellent in transparency.

EXAMPLES

The present invention is hereunder more specifically described by reference to the Examples and Comparative Examples, but it should be construed that the present invention is by no means limited to these Examples.

Polyester resins and additives and so on used in the Examples and Comparative Examples are as follows.

Polyester resin: Polyethylene terephthalate (intrinsic viscosity: 0.83 dL/g), trade name: BK2180, manufactured by Nippon Unipet Co., Ltd. (melting point: 248°C)

Irganox 1010: Pentaerythritol tetrakis[3-(3,5-di-*tert*-butyl-4-hydroxyphenyl)propionate], phenol-based antioxidant, manufactured by BASF SE

Sumilizer GA-80: 3,9-Bis[2-[3-(3-*t*-butyl-4-hydroxy-5-methylphenyl) propionyloxy]-1,1-dimethylethyl]-2,4,8,10-tetraoxaspiro[5.5]undecane, phenol-based antioxidant, manufactured by Sumitomo Chemical Co., Ltd.

Irgafos 168: Tris(2,4-di-*t*-butylphenyl)phosphite, phosphorus-based antioxidant, manufactured by BASF SE

PEP-36: Adekastab PEP-36, 3,9-bis(2,6-di-*t*-butyl-4-methylphenyl)-2,4, 8,10-tetraoxa-3,9-diphosphaspiro[5.5]undecane, phosphorus-based antioxidant, manufactured by Adeka Corporation

Cobalt stearate: Cobalt(II) stearate, manufactured by Wako Pure Chemical Industries, Ltd.

[Measurement Methods]

<Oxygen Barrier Property of Container>

The oxygen barrier property of the container was evaluated by the following method.

An oxygen permeability test by the MOCON method was conducted in conformity with ASTM D3985. For the measurement, OX-TRAN2/61, manufactured by MOCON Inc. was used. 100 mL of water was filled in a 500-mL bottle obtained in each of the Examples and Comparative Examples; nitrogen at 1 atm was made to flow into the inside of the bottle at a rate of 20 mL/min under a condition of an oxygen partial pressure of 0.21 atm at a temperature of 23°C and at a bottle internal humidity of 100% RH, and an external humidity of 50% RH; and oxygen contained in the nitrogen after flowing in the inside of the bottle was detected by a coulometric sensor.

<Color Tone>

The color tone of the obtained pellet was evaluated by the following method.

The color tone of the pellet was measured based on JIS Z 8722 in the following manner. That is, the pellets were filled in a 30-mm$\phi$ cell container and measured four times by the reflection method with a color-difference meter ZE-2000 (manufactured by Nippon Denshoku Industries Co., Ltd., using a halogen lamp at 12 V and 20 W), and an average value thereof was defined as the color tone.

The b* value expresses a chromaticity. "+b*" expresses the yellow direction, and "-b*" expresses the blue direction. In addition, it is meant that as the $\Delta$b* value is small, the yellowing is suppressed. The $\Delta$b* value expresses a difference between the b* value of each of samples of the Examples and Comparative Examples in which the following recycle treatment was conducted and the b* value of the polyester resin alone in which the same recycle treatment as in the Examples and Comparative Examples was conducted.

<Polyamide Resin Content>

Using a trace total nitrogen analyzer TN-2100H (manufactured by Mitsubishi Chemical Analytech Co., Ltd.), a calibration curve was prepared using a pyridine/toluene mixed solution which had been regulated to a predetermined concentration as a standard concentration, and the nitrogen content was measured using 4 to 8 mg of the sample collected from the pellet of the polyamide resin. The measurement was repeated three times, and an average value was calculated. The average value of the obtained nitrogen content was expressed in terms of the polyamide resin content according to the following equation.

$$\alpha = \beta \times (\text{MW [polyamide resin]}/\text{MW [nitrogen atom]})$$

$\alpha$: polyamide resin content, $\beta$: average value of nitrogen content, MW [polyamide resin]: molecular weight per unit of polyamide resin, MW [nitrogen atom]: (molecular weight of nitrogen atom) $\times$ (nitrogen number contained per unit of polyamide resin)

<Amino Group Concentration>

0.5 g of the sample was dissolved in 30 mL of phenol/ethanol = 4/1 (volume ratio), to which was then added 5 mL of methanol, and the resultant was titrated with 0.01N hydrochloric acid as a titration liquid by using an automatic titrator ("GT-200", manufactured by Mitsubishi Chemical Analytech Co., Ltd.). The same operation of undergoing the titration without using a sample was defined as a blank to calculate a terminal amino group concentration.

<Production of Polyamide Resin>

(Production of Polyamide Resin (Y1))

In a reactor having a capacity of 50 liters and equipped with a stirrer, a partial condenser, a total condenser, a thermometer, a dropping funnel, a nitrogen introducing pipe, and a strand die, 15,000 g (102.6 mol) of precisely weighed adipic acid, 13.06 g (123.3 mmol, 151 ppm as a phosphorus atom concentration of the polyamide resin) of sodium hypophosphite monohydrate ($NaH_2PO_2·H_2O$), and 6.849 g (83.49 mmol, 0.68 as a molar number ratio to the sodium hypophosphite monohydrate) of sodium acetate were charged, and after thoroughly purging with nitrogen, the resulting mixture was heated to 170°C in a nitrogen gas stream of a small amount while stirring the inside of the system. 13,896 g (102.0 mol, 0.994 as a charge molar ratio) of metaxylylenediamine was dropped thereto under stirring, and the inside of the system was continuously subjected to temperature rise while removing the produced condensed water outside the system. After completion of dropping of metaxylylenediamine, the reaction was continued for 40 minutes while controlling the inner temperature to 260°C. Thereafter, the inside of the system was pressurized with nitrogen, and a polymer was taken away from the strand die and pelletized to obtain about 24 kg of a polyamide resin.

Subsequently, in a jacket-equipped tumbler dryer provided with a nitrogen gas introducing pipe, a vacuum line, a vacuum pump, and a thermocouple for inner temperature measurement, the aforementioned polyamide resin was charged; the inside of the tumbler dryer was thoroughly purged with a nitrogen gas having a purity of 99% by volume or more while rotating at a fixed rate; the tumbler dryer was then heated in the same nitrogen gas stream; and a pellet temperature was raised to 150°C over about 150 minutes. At a point of time when the pellet temperature reached 150°C, the pressure within the system was reduced to 1 torr or less. The temperature rise was further continued, the pellet temperature was raised to 200°C over about 70 minutes, and the system was then held at 200°C for 30 to 45 minutes. Subsequently, a nitrogen gas having a purity of 99% by volume or more was introduced into the system, and the system was cooled while continuing the rotation of the tumbler dryer, thereby obtaining a polyamide resin (Y1). As a result of measuring a terminal amino group concentration, it was found to be 14.4 μmol/g.

Examples 1 to 12 and Comparative Examples 1 to 7

[Manufacture of Multilayer Container and Recycle Property Evaluation]

<Polyester Resin>

A polyester resin (polyethylene terephthalate (intrinsic viscosity: 0.83 dL/g), trade name: BK2180, manufactured by Nippon Unipet Co., Ltd.) and an antioxidant shown in each of Tables 1 and 2 were subjected to dry blending at 20 to 30°C using a tumbler, thereby preparing a polyester resin mixture.
The "mass %" described as the addition amount of the antioxidant in each of the tables means an amount (mass %) of the antioxidant based on 100% by mass of the polyester resin mixture.

<Polyamide Resin>

The above-synthesized polyamide resin (Yl) and cobalt stearate were subjected to dry blending in amounts shown in each of Tables 1 and 2 at 20 to 30°C, thereby preparing a polyamide resin mixture.
The addition amount of the cobalt salt in each of the tables is an addition amount (ppm) as expressed in terms of cobalt in the polyamide resin mixture.

<Preform Molding>

Using an injection molding machine having two injection cylinders (type: DU130CI, manufactured by Sumitomo Heavy Industries, Ltd.) and a die with two cavities (manufactured by Kortec), the polyester resin mixture was injected from the one-sided injection cylinder, and the polyamide resin mixture was injected from the other injection cylinder; and a three-layer preform composed of polyester resin composition layer/polyamide resin composition layer/polyester resin composition layer (set to an amount corresponding to 25 g per preform) was produced by means of injection molding under the following condition such that a mass proportion (content) of the polyamide resin to a sum total of the polyester resin composition layers and the polyamide resin composition layer was a value described in each of Tables 1 and 2. The preform had a shape having a total length of 95 mm, an outer diameter of 22 mm, and a wall thickness of 4.0 mm. The molding condition of the three-layer preform is as follows.

In Example 12, in the polyamide resin composition layer, a mixture of polyamide resin/polyester resin (30/70) was used in place of the polyamide resin, and the content of the polyamide resin was regulated to a value shown in Table 1, thereby forming a preform.

Injection cylinder temperature on the skin side: 285°C
Injection cylinder temperature on the core side (only the three layers): 265°C
Resin channel temperature within the die: 285°C
Cooling water temperature of the die: 15°C
Cycle time: 40 seconds

<Bottle Molding>

The above-obtained preform was subjected to biaxial stretch blow molding with a blow molding device (EFB1000ET, manufactured by Frontier Inc.), thereby obtaining a bottle (hollow multilayer container). The bottle had a total length of 223 mm, an outer diameter of 65 mm, and an inner volume of 500 mL, and the bottom thereof had a petaloid shape. A dimple was not provided in the body. The biaxial stretch blow molding condition is as follows.
Preform heating temperature: 103°C
Pressure for stretch rod: 0.7 MPa
Primary blow pressure: 1.1 MPa
Secondary blow pressure: 2.5 MPa
Primary blow delay time: 0.30 seconds
Primary blow time: 0.30 seconds
Secondary blow time: 2.0 seconds
Blow exhaustion time: 0.6 seconds
Die temperature: 30°C
Average thickness of bottle body after blowing: 300 μm
Average thickness of each layer of bottle:

$$\text{PES (outermost layer)/PA/PES (innermost layer)} = 190/25/85 \ (\mu m)$$

(PES: polyester resin composition layer, PA: polyamide resin composition layer)

<Recycle Evaluation in Multilayer Bottle>

(Air Classification Step)

10 kg of the above-obtained hollow multilayer container was formed into a milled flake by using a milling machine having a mesh size of 8 mm, and the flake was then washed with water. Thereafter, the resulting flake was treated using a froth separator CFS-150 (manufactured by ACO Co., Ltd.) at a feed rate of 10 kg/hr under a condition of suction blower: 35 Hz and secondary blower: 30 Hz, and a material with a heavy specific gravity, which dropped on a lower receiver, was recovered. Finally, the flaky milled product having dropped on the lower receiver was recovered as the regenerated polyester.

The content of the polyamide resin after the air classification step is described in each of Tables 1 and 2.

(Granulation Step)

The recovered regenerated polyester was extruded in a strand form using an extruder in which a strand die was installed in a vacuum vent-equipped biaxial extruder (aperture: 37 mmφ), at a heater temperature of 255 to 270°C and a discharge rate of 20 kg/hr, and cut by a pelletizer while cooling with a water tank, thereby undergoing pelletization.

(Crystallization/Solid-phase Polymerization (SSP) Step)

The pellet obtained in the aforementioned granulation step was heated under vacuum of 1 torr or less at 200°C for 7 hours, and the resulting pellet was then taken away and evaluated for the color tone. The results are shown in Tables 1 and 2, respectively.

Table 1

| | | Example | | | | | | | | | | | |
|---|---|---|---|---|---|---|---|---|---|---|---|---|---|
| | | 1 | 2 | 3 | 4 | 5 | 6 | 7 | 8 | 9 | 10 | 11 | 12 |
| Evaluation of multilayer container | Content of polyamide resin (mass %) | 2.0 | 5.0 | 10.0 | 5.0 | 5.0 | 2.0 | 5.0 | 5.0 | 5.0 | 5.0 | 5.0 | 2.1 |
| | Kind of antioxidant | Irganox 1010 | | | | | | | | Sumilizer GA-80 | Irgafos 168 | PEP-36 | Irganox 1010 |
| | Content of antioxidant in polyester resin composition layer (mass %) | 0.10 | 0.10 | 0.10 | 0.10 | 0.10 | 0.02 | 0.05 | 0.50 | 0.10 | 0.10 | 0.10 | 0.10 |
| | Content of antioxidant in polyamide resin composition layer (mass %) | 0.00 | 0.00 | 0.00 | 0.00 | 0.00 | 0.00 | 0.00 | 0.00 | 0.00 | 0.00 | 0.00 | 0.00 |
| | Content of cobalt stearate in polyamide resin composition layer (mass %) | 0.42 | 0.42 | 0.42 | 0.11 | 0.85 | 0.42 | 0.42 | 0.42 | 0.42 | 0.42 | 0.42 | 0.42 |
| | Content as expressed in terms of cobalt in polyamide resin composition layer (ppm) | 400 | 400 | 400 | 100 | 800 | 400 | 400 | 400 | 400 | 400 | 400 | 400 |
| | Bottle capacity (mL) | 500 | 500 | 500 | 500 | 500 | 500 | 500 | 500 | 500 | 500 | 500 | 500 |
| | Preform mass (g) | 25 | 25 | 25 | 25 | 25 | 25 | 25 | 25 | 25 | 25 | 25 | 25 |
| | Oxygen barrier property 24 hours after start of measurement (cc/(bottle·0.21 atom·day)) | 0.002 | < 0.001 | < 0.001 | 0.002 | < 0.001 | 0.002 | < 0.001 | < 0.001 | < 0.001 | < 0.001 | < 0.001 | 0.002 |
| After recycle | Content of polyamide resin after air classification (mass %) | 0.4 | 1.0 | 2.0 | 1.0 | 1.0 | 0.4 | 1.0 | 1.0 | 1.0 | 1.0 | 1.0 | 1.7 |
| | b* | -0.7 | 0.0 | 1.3 | -0.2 | 0.2 | 0.0 | 1.2 | -0.1 | 0.1 | 1.3 | 1.3 | 1.2 |
| | $\Delta$ b* | 1.1 | 1.8 | 3.1 | 1.6 | 2.0 | 1.8 | 3.0 | 1.7 | 1.9 | 3.1 | 3.1 | 3.0 |

Table 2

| | | Comparative Example | | | | | | | Reference Example |
|---|---|---|---|---|---|---|---|---|---|
| | | 1 | 2 | 3 | 4 | 5 | 6 | 7 | 1 |
| Evaluation of multilayer container | Content of polyamide resin (mass %) | 2.0 | 5.0 | 10.0 | 5.0 | 5.0 | 5.0 | 5.0 | 0.0 |
| | Kind of antioxidant | No | | | | | Irganox 1010 | | No |
| | Content of antioxidant in polyester resin composition layer (mass %) | 0.00 | 0.00 | 0.00 | 0.00 | 0.00 | 0.00 | 0.00 | 0.00 |
| | Content of antioxidant in polyamide resin composition layer (mass %) | 0.00 | 0.00 | 0.00 | 0.00 | 0.00 | 0.10 | 0.10 | 0.00 |
| | Content of cobalt stearate in polyamide resin composition layer (mass %) | 0.42 | 0.42 | 0.42 | 0.11 | 0.85 | 0.42 | 0.00 | 0.00 |
| | Content as expressed in terms of cobalt in polyamide resin composition layer (ppm) | 400 | 400 | 400 | 100 | 800 | 400 | 0 | 0 |
| | Bottle capacity (mL) | 500 | 500 | 500 | 500 | 500 | 500 | 500 | 500 |
| | Preform mass (g) | 25 | 25 | 25 | 25 | 25 | 25 | 25 | 25 |
| | Oxygen barrier property 24 hours after start of measurement (cc/(bottle·0.21 atom·day)) | 0.002 | < 0.001 | < 0.001 | 0.002 | < 0.001 | 0.017 | 0.018 | 0.040 |
| After recycle | Content of polyamide resin after air classification (mass %) | 0.4 | 1.0 | 2.0 | 1.0 | 1.0 | 1.0 | 1.0 | 0.0 |
| | b* | 0.2 | 1.6 | 4.1 | 1.5 | 1.8 | 0.0 | 0.0 | -1.8 |
| | Δb* | 2.0 | 3.4 | 5.9 | 3.3 | 3.6 | 1.8 | 1.8 | - |

In Tables 1 and 2, Δb* expresses a difference from b* of Reference Example 1.

According to Tables 1 and 2, in Comparative Examples 1 to 7 in which the polyester resin composition layer does not contain the antioxidant, as compared with the case of the polyester resin alone (Reference Example 1), the increase of b* was large, and the yellowing proceeded due to recovery and regeneration. On the other hand, in Examples 1 to 12 in which the polyester resin composition layer contains the antioxidant, the yellowing was significantly suppressed.

In particular, in the case where the phenol-based antioxidant is contained, the effect for suppressing yellowing was remarkable.

In addition, in the case where the polyamide resin composition layer contains cobalt stearate that is the cobalt salt, the oxygen barrier property of the multilayer container was meaningfully improved.

Furthermore, in Comparative Example 6 in which the antioxidant is added to the polyamide resin composition layer, though the yellowing after recycle is suppressed, since the antioxidant inhibits the oxygen absorption effect due to the polyamide resin and cobalt, the oxygen barrier property was lowered.

**Claims**

1. A multilayer container comprising

   a polyester resin composition layer containing a polyester resin (X) and an antioxidant; and
   a polyamide resin composition layer containing a polyamide resin (Y) and a cobalt salt, wherein
   the polyamide resin (Y) has a structural unit derived from a diamine and a structural unit derived from a dicarboxylic acid, and 50 mol% or more of the structural unit derived from a diamine is a structural unit derived from xylylenediamine;
   the content of the antioxidant in the polyester resin composition layer is 0.01 to 1% by mass; and
   the content of the cobalt salt in the polyamide resin composition layer is 100 to 1,000 ppm as expressed in terms of cobalt.

2. The multilayer container according to claim 1, wherein the polyester resin (X) has a structural unit derived from a dicarboxylic acid and a structural unit derived from a diol, 50 mol% or more of the structural unit derived from a dicarboxylic acid being a structural unit derived from terephthalic acid; and 50 mol% or more of the structural unit derived from a diol being a structural unit derived from ethylene glycol.

3. The multilayer container according to claim 1 or 2, wherein the polyester resin (X) has a structural unit derived from a dicarboxylic acid and a structural unit derived from a diol, 90 mol% or more of the structural unit derived from a dicarboxylic acid being a structural unit derived from terephthalic acid; and 90 mol% or more of the structural unit derived from a diol being a structural unit derived from ethylene glycol.

4. The multilayer container according to any one of claims 1 to 3, wherein the polyamide resin (Y) has a structural unit derived from a diamine and a structural unit derived from a dicarboxylic acid, 80 mol% or more of the structural unit derived from a diamine being a structural unit derived from xylylenediamine; and 80 mol% or more of the structural unit derived from a dicarboxylic acid being a structural unit derived from adipic acid.

5. The multilayer container according to any one of claims 1 to 4, wherein the antioxidant contains at least one selected from the group consisting of a phenol-based antioxidant and a phosphorus-based antioxidant.

6. The multilayer container according to any one of claims 1 to 5, wherein the antioxidant contains at least a phenol-based antioxidant.

7. The multilayer container according to any one of claims 1 to 6, wherein the content of the polyamide resin (Y) is from 1.0 to 15% by mass relative to a sum total of the polyester resin composition layer and the polyamide resin composition layer.

8. The multilayer container according to any one of claims 1 to 7, having the polyamide resin composition layer sandwiched directly or indirectly between two layers of the polyester resin composition layer.

9. Use as a recycle raw material of the multilayer container according to any one of claims 1 to 8.

10. A method for producing a regenerated polyester, comprising a step of recovering the polyester resin composition from the multilayer container according to any one of claims 1 to 8.

11. The method for producing a regenerated polyester according to claim 10, comprising a step of removing the whole or a part of the polyamide resin composition layer from the multilayer container to recover the polyester resin composition layer.

**12.** The method for producing a regenerated polyester according to claim 11, wherein the removal of the polyamide resin composition layer is conducted by air classification after milling of the multilayer container.

**13.** The method for producing a regenerated polyester according to any one of claims 10 to 12, wherein the recovered polyester resin composition is subjected to at least one step selected from the group consisting of a crystallization step and a solid-phase polymerization step.

**Patentansprüche**

**1.** Ein mehrschichtiger Behälter, umfassend

eine Schicht aus einer Polyesterharz-Zusammensetzung, die ein Polyesterharz (X) und ein Antioxidans enthält; und

eine Schicht aus einer Polyamidharz-Zusammensetzung, die ein Polyamidharz (Y) und ein Kobaltsalz enhält, wobei

das Polyamidharz (Y) eine von einem Diamin abgeleitete Struktureinheit und eine von einer Dicarbonsäure abgeleitete Struktureinheit aufweist, und 50 Mol-% oder mehr der von einem Diamin abgeleiteten Struktureinheit, eine von Xylylendiamin abgeleitete Struktureinheit ist;

der Gehalt des Antioxidans in der Schicht aus der Polyesterharz-Zusammensetzung 0,01 bis 1 Masse-% beträgt; und

der Gehalt des Kobaltsalzes in der Schicht aus der Polyamidharz-Zusammensetzung 100 bis 1.000 ppm, ausgedrückt als Kobalt, beträgt.

**2.** Der mehrschichtige Behälter gemäß Anspruch 1, wobei das Polyesterharz (X) eine von einer Dicarbonsäure abgeleitete Struktureinheit und eine von einem Diol abgeleitete Sturukturemheit aufweist, wobei 50 Mol-% oder mehr der von einer Dicarbonsäure abgeleiteten Struktureinheit, eine von Terephthalsäure abgeleitete Struktureinheit ist; und 50 Mol-% oder mehr der von einem Diol abgeleiteten Struktureinheit eine von Ethylenglykol abgeleitete Struktureinheit ist.

**3.** Ein mehrschichtiger Behälter gemäß Anspruch 1 oder 2, wobei das Polyesterharz (X) eine von einer Dicarbonsäure abgeleitete Struktureinheit und eine von einem Diol abgeleitete Sturukturemheit aufweist, wobei 90 Mol-% oder mehr der von einer Dicarbonsäure abgeleiteten Struktureinheit, eine von Terephthalsäure abgeleitete Struktureinheit ist, und 90 Mol-% oder mehr der von einem Diol abgeleiteten Struktureinheit eine von Ethylenglykol abgeleitete Struktureinheit ist.

**4.** Ein mehrschichtiger Behälter gemäß einem der Ansprüche 1 bis 3, wobei das Polyamidharz (Y) eine von einem Diamin abgeleitete Struktureinheit und eine von einer Dicarbonsäure abgeleitete Sturukturemheit aufweist, wobei 80 Mol-% oder mehr der von einem Diamin abgeleiteten Struktureinheit, eine von Xylylendiamin abgeleitete Struktureinheit ist, und 80 Mol-% oder mehr der von einer Dicarbonsäure abgeleiteten Struktureinheit eine von Adipinsäure abgeleitete Struktureinheit ist.

**5.** Der mehrschichtige Behälter gemäß einem der Ansprüche 1 bis 4, wobei das Antioxidans mindestens eines, ausgewählt aus der Gruppe bestehend aus einem Antioxidans auf Phenolbasis und einem Antioxidans auf Phosphorbasis, enthält.

**6.** Der mehrschichtige Behälter gemäß einem der Ansprüche 1 bis 5, wobei das Antioxidans mindestens ein Antioxidans auf Phenolbasis enthält.

**7.** Der mehrschichtige Behälter gemäß einem der Ansprüche 1 bis 6, wobei der Gehalt des Polyamidharzes (Y) 1,0 bis 15 Masse-%, bezogen auf eine Gesamtsumme der Schicht aus der Polyesterharz-Zusammensetzung und der Schicht aus der Polyamidharz-Zusammensetzung, beträgt.

**8.** Der mehrschichtige Behälter gemäß einem der Ansprüche 1 bis 7, wobei die Schicht aus der Polyamidharz-Zusammensetzung sandwichartig direkt oder indirekt zwischen zwei Schichten aus der Polyesterharz-Zusammensetzung angeordnet ist.

**9.** Verwendung des mehrschichtigen Behälters gemäß einem der Ansprüche 1 bis 8 als Recycling-Rohstoff.

**10.** Ein Verfahren zur Herstellung eines regenerierten Polyesters, umfassend einen Schritt zur Gewinnung der Polyesterharz-Zusammensetzung aus dem mehrschichtigen Behälter gemäß einem der Ansprüche 1 bis 8.

**11.** Das Verfahren zur Herstellung eines regenerierten Polyesters gemäß Anspruch 10, umfassend einen Schritt zum Entfernen der gesamten oder eines Teils der Schicht aus der Polyamidharz-Zusammensetzung von dem mehrschichtigen Behälter, um die Schicht aus der Polyesterharz-Zusammensetzung zu gewinnen.

**12.** Das Verfahren zur Herstellung eines regenerierten Polyesters gemäß Anspruch 11, wobei das Entfernen der Schicht aus der Polyamidharz-Zusammensetzung durch Luftklassifizierung nach dem Vermahlen des mehrschichtigen Behälters durchgeführt wird.

**13.** Das Verfahren zur Herstellung eines regenerierten Polyesters gemäß einem der Ansprüche 10 bis 12, wobei die gewonnene Polyesterharz-Zusammensetzung mindestens einem Schritt unterworfen wird, ausgewählt ist aus der Gruppe bestehend aus einem Kristallisationsschritt und einem Festphasen-Polymerisationsschritt.


**Revendications**

**1.** Récipient multicouche comprenant
une couche de composition de résine de polyester contenant une résine de polyester (X) et un antioxydant ; et
une couche de composition de résine de polyamide contenant une résine de polyamide (Y) et un sel de cobalt,
dans lequel
la résine de polyamide (Y) a un motif structurel dérivé d'une diamine et un motif structurel dérivé d'un acide dicarboxylique, et 50 % en moles ou plus du motif structurel dérivé d'une diamine est un motif structurel dérivé de xylylènediamine ;
la teneur en l'antioxydant dans la couche de composition de résine de polyester est de 0,01 à 1 % en masse ; et
la teneur en le sel de cobalt dans la couche de composition de résine de polyamide est de 100 à 1 000 ppm, exprimée en termes de cobalt.

**2.** Récipient multicouche selon la revendication 1, dans lequel la résine de polyester (X) a un motif structurel dérivé d'un acide dicarboxylique et un motif structurel dérivé d'un diol, 50 % en moles ou plus du motif structurel dérivé d'un acide dicarboxylique étant un motif structurel dérivé d'acide téréphtalique ; et 50 % en moles ou plus du motif structurel dérivé d'un diol étant un motif structurel dérivé d'éthylèneglycol.

**3.** Récipient multicouche selon la revendication 1 ou 2, dans lequel la résine de polyester (X) a un motif structurel dérivé d'un acide dicarboxylique et un motif structurel dérivé d'un diol, 90 % en moles ou plus du motif structurel dérivé d'un acide dicarboxylique étant un motif structurel dérivé d'acide téréphtalique ; et 90 % en moles ou plus du motif structurel dérivé d'un diol étant un motif structurel dérivé d'éthylèneglycol.

**4.** Récipient multicouche selon l'une quelconque des revendications 1 à 3, dans lequel la résine de polyamide (Y) a un motif structurel dérivé d'une diamine et un motif structurel dérivé d'un acide dicarboxylique, 80 % en moles ou plus du motif structurel dérivé d'une diamine étant un motif structurel dérivé de xylylènediamine ; et 80 % en moles ou plus du motif structurel dérivé d'un acide dicarboxylique étant un motif structurel dérivé d'acide adipique.

**5.** Récipient multicouche selon l'une quelconque des revendications 1 à 4, dans lequel l'antioxydant contient au moins l'un choisi dans le groupe constitué par un antioxydant à base de phénol et un antioxydant à base de phosphore.

**6.** Récipient multicouche selon l'une quelconque des revendications 1 à 5, dans lequel l'antioxydant contient au moins un antioxydant à base de phénol.

**7.** Récipient multicouche selon l'une quelconque des revendications 1 à 6, dans lequel la teneur en la résine de polyamide (Y) est de 1,0 à 15 % en masse par rapport à la somme totale de la couche de composition de résine de polyester et de la couche de composition de résine de polyamide.

**8.** Récipient multicouche selon l'une quelconque des revendications 1 à 7, ayant la couche de composition de résine de polyamide prise en sandwich directement ou indirectement entre deux couches de la couche de composition de résine de polyester.

**EP 3 296 097 B1**

9. Utilisation, en tant que matière première de recyclage, du récipient multicouche selon l'une quelconque des revendications 1 à 8.

10. Méthode de production d'un polyester régénéré, comprenant une étape de récupération de la composition de résine de polyester à partir du récipient multicouche selon l'une quelconque des revendications 1 à 8.

11. Méthode de production d'un polyester régénéré selon la revendication 10, comprenant une étape de retrait de tout ou partie de la couche de composition de résine de polyamide à partir du récipient multicouche pour que soit récupérée la couche de composition de résine de polyester.

12. Méthode de production d'un polyester régénéré selon la revendication 11, dans laquelle le retrait de la couche de composition de résine de polyamide est effectué par classification pneumatique après broyage du récipient multicouche.

13. Méthode de production d'un polyester régénéré selon l'une quelconque des revendications 10 à 12, dans laquelle la composition de résine de polyester récupérée est soumise à au moins une étape choisie dans le groupe constitué par une étape de cristallisation et une étape de polymérisation en phase solide.

26

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012520364 A